(19)

**Europäisches Patentamt**

**European Patent Office**

**Office européen des brevets**

(11) **EP 4 287 523 A1**

(12) **EUROPEAN PATENT APPLICATION**
published in accordance with Art. 153(4) EPC

(43) Date of publication:
06.12.2023 Bulletin 2023/49

(21) Application number: 22778795.9

(22) Date of filing: 25.03.2022

(51) International Patent Classification (IPC):
$H04B\ 7/0456^{(2017.01)}$     $H04B\ 7/06^{(2006.01)}$

(52) Cooperative Patent Classification (CPC):
H04B 7/0456; H04B 7/06; H04B 17/11;
H04B 17/21; H04W 16/20; H04W 52/18

(86) International application number:
PCT/CN2022/083113

(87) International publication number:
WO 2022/206613 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.04.2021 CN 202110362397

(71) Applicant: Huawei Technologies Co., Ltd.
Shenzhen, Guangdong 518129 (CN)

(72) Inventors:
• HUANG, Yulin
Shenzhen, Guangdong 518129 (CN)
• XU, Mingtao
Shenzhen, Guangdong 518129 (CN)
• XU, Heng
Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **PHASE CORRECTION METHOD AND COMMUNICATION APPARATUS**

(57) This application provides a phase correction method and a communication apparatus. In the phase correction method, a network device sends a downlink reference signal to a terminal. The terminal determines a precoding matrix based on the received downlink reference signal and feeds back the precoding matrix to the network device. The network device estimates a phase error between a plurality of channels of the network device based on the precoding matrix fed back by the terminal, and corrects phases of the plurality of channels based on the obtained phase error. In the foregoing technical solution, soft correction of phases of a plurality of combined channels of the network device may be implemented by using an air interface feedback of a terminal, so that it can be ensured that the phases of the plurality of combined channels are consistent, and transmit power can be increased in a manner of combining the plurality of channels, thereby enhancing coverage of an indoor distributed system.

FIG. 3

EP 4 287 523 A1

## Description

This application claims priority to Chinese Patent Application No. 202110362397.9, filed with the China National Intellectual Property Administration on April 2, 2021 and entitled "PHASE CORRECTION METHOD AND COMMUNICATION APPARATUS", which is incorporated herein by reference in its entirety.

## TECHNICAL FIELD

This application relates to the communication field, and more specifically, to a phase correction method and a communication apparatus.

## BACKGROUND

In buildings, a signal from a macro base station is severely attenuated and cannot provide plenty of coverage. As a result, communication quality of a terminal is severely affected. In this case, an indoor distributed system can effectively improve the communication quality in the building, improve indoor signal coverage, and provide high-quality indoor communication for users.

With large-scale construction of a 5th generation (5th generation, 5G) communication system, transition from a long term evolution (long term evolution, LTE) indoor distributed system to a 5G indoor distributed system needs to be considered. A coverage problem of integrating the 5G indoor distributed system into an existing LTE indoor distributed system needs to be resolved urgently. Evolution from an LTE distributed antenna system (distributed antenna system, DAS) 2.3 GHz to a 5G DAS 2.6 GHz is used as an example. If a signal source of the 5G indoor distributed system is directly integrated into an existing LTE DAS network, coverage of the 5G indoor distributed system is more than 3 dB lower than that of the LTE indoor distributed system because a 5G bandwidth is much higher As a result, the 5G indoor distributed system cannot cover the same area as the LTE indoor distributed system.

## SUMMARY

This application provides a phase correction method and a communication apparatus, to implement phase correction between a plurality of channels before combination in a correction manner, thereby helping increase transmit power of an indoor distributed system, and enhancing coverage of the indoor distributed system.

According to a first aspect, this application provides a phase correction method, where the method includes: A network device sends a first signal to a terminal, where the first signal is combined after passing through N channels of the network device and then sent to the terminal, and N is an integer greater than 1; the network device receives first indication information from the terminal, where the first indication information indicates a first precoding matrix determined based on the first signal; the network device determines a first phase error between the N channels based on the first precoding matrix; and the network device corrects phases of some or all of the N channels based on the first phase error.

The channel herein may be a radio frequency channel, and may be located in a radio frequency apparatus of the network device, for example, located in a remote radio unit (remote radio unit, RRU).

The some or all of the N channels are channels on which phase correction needs to be performed. For example, the N channels are a channel 1 to a channel 4. The channel 1 is used as a reference. A phase error of the channel 2 relative to the channel 1 is 0. A phase error of the channel 3 relative to the channel 1 is B. A phase error of the channel 4 relative to the channel 1 is C. In this case, phases of the channel 3 and the channel 4 in the four channels need to be corrected.

The first phase error between the N channels may include a phase error of one channel of the N channels relative to another channel of the N channels.

In an example, a phase of a channel may be selected as a reference, and the first phase error between the N channels may be a phase error of N-1 channels relative to the channel used as a reference. For example, the N channels are a channel 1 to a channel 4. The channel 1 is used as a reference. The first phase error between the four channels may include a phase error of the channel 2 relative to the channel 1, a phase error of the channel 3 relative to the channel 1, and a phase error of the channel 4 relative to the channel 1. Alternatively, the channel 3 is used as a reference. The first phase error between the four channels includes a phase error of the channel 1 relative to the channel 3, a phase error of the channel 2 relative to the channel 3, a phase error of the channel 4 relative to the channel 3, and the like.

In another example, a phase of a channel may not be selected as a unified reference, and the first phase error between the N channels may be a phase error of the N-1 channels relative to different channels. For example, the N channels are a channel 1 to a channel 4. The first phase error between the four channels may include a phase error of the channel 2 relative to the channel 1, a phase error of the channel 3 relative to the channel 2, and a phase error of the channel 4 relative to the channel 3.

In another example, with reference to the foregoing two examples, the first phase error between the N channels may include phase errors of some channels relative to one channel and phase errors of some channels relative to another channel. For example, the N channels are a channel 1 to a channel 4. The first phase error between the four channels includes a phase error of the channel 2 relative to the channel 1, a phase error of the channel 3 relative to the channel 1, a phase error of the channel 4 relative to the channel 2, and the like.

In another example, a phase value may be further selected as a reference, and the phase value may not be a phase of the N channels. In this case, the first phase error between the N channels may include phase errors of the N channels respectively relative to the phase value used as the reference. For example, the N channels are a channel 1 to a channel 4. The phase value used as the reference may be R. Phases of R and the four channels are different. In this case, the first phase error between the four channels may include a phase error of the channel 1 relative to R, a phase error of the channel 2 relative to R, a phase error of the channel 3 relative to R, a phase error of the channel 4 relative to R, and the like.

It can be learned from the foregoing plurality of examples that the first phase error between the N channels may directly or indirectly determine a phase error between any two channels between the N channels.

In some implementations, the network device compensates for phases of some or all of the N channels based on the first phase error, so that the phases of the N channels keep consistent, thereby correcting the phases of the some or all of the N channels. For example, the N channels are a channel 1 to a channel 4. The channel 1 is used as a reference. A phase of the channel 1 is A. A phase error of the channel 2 relative to the channel 1 is 0, a phase error of the channel 3 relative to the channel 1 is B, and a phase error of the channel 4 relative to the channel 1 is C. In this case, the network device may compensate B for the phase of the channel 3 and compensate C for the phase of the channel 4, so that phases of the four channels are all A.

In this application, the network device may directly correct the phases of the some or all of the N channels based on the first phase error, or may further process the first phase error, for example, obtain another phase error based on the first phase error, and then correct the phases of the some or all of the N channels based on the another phase error. In other words, the phase value used by the network device to perform phase correction is related to the first phase error.

In the foregoing technical solution, soft correction of phases of a plurality of combined channels of the network device may be implemented by using an air interface feedback of a terminal, so that it can be ensured that the phases of the plurality of combined channels are consistent, and transmit power can be increased in a manner of combining the plurality of channels, thereby enhancing coverage of an indoor distributed system. In addition, compared with directly increasing the transmit power or performing correction network reconstruction, this helps reduce costs.

With reference to the first aspect, in a possible implementation, a port quantity of the first precoding matrix is M, and M is an integer greater than or equal to N.

If M is greater than N, a port quantity of a precoding matrix fed back by the terminal is greater than a quantity of channels for transmitting a signal. In other words, the terminal may feed back a precoding matrix with higher precision, thereby helping improve phase estimation precision.

With reference to the first aspect or any possible implementation of the first aspect, in another possible implementation, a rank of the first precoding matrix is 1.

When the rank is 1, this helps the terminal determine a best signal stream, improve accuracy of signal estimation, select a more matched precoding matrix, and improve accuracy of phase estimation.

With reference to any one of the first aspect or the possible implementations of the first aspect, in another possible implementation, the method further includes: The network device sends second indication information to the terminal, where the second indication information indicates the terminal to feed back a precoding matrix whose rank is 1 and/or indicates the terminal to feed back a precoding matrix whose port quantity is M.

With reference to any one of the first aspect or the possible implementations of the first aspect, in another possible implementation, the method further includes: The network device sends a second signal to the terminal through the N channels, where the second signal is combined and then sent to the terminal after passing through the N channels; the network device receives third indication information from the terminal, where the third indication information indicates a second precoding matrix determined based on the second signal; the network device determines a second phase error between the N channels based on the second precoding matrix; and that the network device corrects phases of some or all of the N channels based on the first phase error includes: the network device corrects the phases of the some or all of the N channels based on the first phase error and the second phase error.

According to the foregoing technical solution, a plurality of measurement feedbacks may be performed to improve phase error estimation precision until a precision requirement is met, thereby implementing channel phase correction before combination in an NR indoor distributed system.

With reference to the first aspect or any possible implementation of the first aspect, in another possible implementation, before passing through the N channels, the first signal is weighted by using a first weighting matrix, and the first weighting matrix includes weighted values respectively corresponding to the N channels; before passing through the N channels, the second signal is weighted by using a second weighting matrix, where the second weighting matrix includes weighted values respectively corresponding to the N channels; and phase rotation by a preset angle is performed on weighted values of the some of the N channels in the second weighting matrix relative to weighted values of the some channels in the first weighting matrix.

With reference to the first aspect or any possible implementation of the first aspect, in another possible implementation, N is 2, the N channels include a first channel and a second channel, a weighted value of the first channel in the first weighting matrix is the same as a weighted value of the first channel in the second weighting matrix, and phase rotation by a preset angle is performed on a weighted value of the second channel in the second weighting matrix relative to a weighted value of the first channel in the first weighting matrix.

With reference to any one of the first aspect or the possible implementations of the first aspect, in another possible implementation, the method further includes: The network device determines a to-be-corrected phase error if the first phase error is equal to the second phase error, where the to-be-corrected phase error is a difference between the first phase error and a half of the preset angle; and that the network device corrects the phases of the some or all of the N channels based on the first phase error and the second phase error includes: the network device corrects a phase of the first channel and/or a phase of the second channel based on the to-be-corrected phase error.

With reference to any one of the first aspect or the possible implementations of the first aspect, in another possible implementation, the method further includes: The network device determines a to-be-corrected phase error if the first phase error is equal to a sum of the second phase error and twice the preset angle, where the to-be-corrected phase error is a sum of the first phase error and a half of the preset angle; and that the network device corrects the phases of the some or all of the N channels based on the first phase error and the second phase error includes: the network device corrects a phase of the first channel and/or a phase of the second channel based on the to-be-corrected phase error.

With reference to the first aspect or any possible implementation of the first aspect, in another possible implementation, the preset angle is related to a quantity of horizontal-dimensional beams and a beam densification multiple.

Optionally, the preset angle is related to a quantity N1 of horizontal-dimensional beams and a beam densification multiple O1.

For example, when the terminal feeds back a precoding matrix whose port quantity is eight, N1 is 4, O1 is 4, and the preset angle may be 360/N1/O1/2=11.25°.

With reference to the first aspect or any possible implementation of the first aspect, in another possible implementation, after being combined, the first signal is transmitted by an antenna to the terminal after being amplified by a power amplifier.

This helps improve signal quality of the first signal, thereby improving accuracy of phase estimation.

With reference to the first aspect or any possible implementation of the first aspect, in another possible implementation, the first signal is a channel state information-reference signal (channel state information-reference signal, CSI-RS).

According to a second aspect, this application provides a phase correction method, where the method includes: A terminal receives a first signal from a network device, where the first signal is combined after passing through N channels of the network device and then received by the terminal, and N is an integer greater than 1; the terminal determines a first precoding matrix based on the first signal, where the first precoding matrix is used to correct phases of some or all of the N channels; and the terminal sends first indication information to the network device, where the first indication information indicates the first precoding matrix.

In the foregoing technical solution, soft correction of phases between a plurality of channels before combination may be implemented by using an air interface feedback of the terminal. In addition, compared with directly increasing the transmit power or performing correction network reconstruction, this helps reduce costs.

With reference to the second aspect, in a possible implementation, a port quantity of the first precoding matrix is M, and M is an integer greater than or equal to N.

If M is greater than N, a port quantity of a precoding matrix fed back by the terminal is greater than a quantity of channels for transmitting a signal. In other words, the terminal may feed back a precoding matrix with higher precision, thereby helping improve phase estimation precision.

With reference to the second aspect or any possible implementation of the second aspect, in another possible implementation, a rank of the first precoding matrix is 1.

When the rank is 1, this helps the terminal determine a best signal stream, improve accuracy of signal estimation, select a more matched precoding matrix, and improve accuracy of phase estimation.

With reference to any one of the second aspect or the possible implementations of the second aspect, in another possible implementation, the method further includes: The terminal receives the second indication information from the network device, where the second indication information indicates the terminal to feed back a precoding matrix whose rank is 1 and/or indicates the terminal to feed back a precoding matrix whose port quantity is M.

According to a third aspect, this application provides a communication apparatus. The apparatus includes a transceiver unit and a processing unit. The transceiver unit is configured to send a first signal to a terminal, where the first signal is combined after passing through N channels of the communication apparatus and then sent to the terminal, and N is an integer greater than 1. The transceiver unit is further configured to receive first indication information from the terminal, where the first indication information indicates a first precoding matrix determined based on the first signal. The processing unit is configured to determine a first phase error between the N channels based on the first precoding matrix. The processing unit is further configured to correct phases of some or all of the N channels based on the first phase error.

With reference to the third aspect, in a possible implementation, a port quantity of the first precoding matrix is M, and M is an integer greater than or equal to N.

With reference to any one of the third aspect or the possible implementations of the third aspect, in another possible implementation, the transceiver unit is further configured to send second indication information to the terminal, where the second indication information indicates the terminal to feed back a precoding matrix whose port quantity is M.

With reference to the third aspect or any possible implementation of the third aspect, in another possible implementation, a rank of the first precoding matrix is 1.

With reference to any one of the third aspect or the possible implementations of the third aspect, in another possible implementation, the transceiver unit is further configured to send the second indication information to the terminal, where the second indication information indicates the terminal to feed back a precoding matrix whose rank is 1.

With reference to the third aspect or any possible implementation of the third aspect, in another possible implementation, the transceiver unit is further configured to send a second signal to the terminal through the N channels, where the second signal is combined after passing through the N channels and then sent to the terminal. The transceiver unit is further configured to receive third indication information from the terminal, where the third indication information indicates a second precoding matrix determined based on the second signal. The processing unit is further configured to determine a second phase error between the N channels based on the second precoding matrix. The processing unit is specifically configured to correct the phases of the some or all of the N channels based on the first phase error and the second phase error.

With reference to the third aspect or any possible implementation of the third aspect, in another possible implementation, before passing through the N channels, the first signal is weighted by using a first weighting matrix, and the first weighting matrix includes weighted values respectively corresponding to the N channels; before passing through the N channels, the second signal is weighted by using a second weighting matrix, where the second weighting matrix includes weighted values respectively corresponding to the N channels; and phase rotation by a preset angle is performed on weighted values of the some of the N channels in the second weighting matrix relative to weighted values of the some channels in the first weighting matrix

With reference to the third aspect or any possible implementation of the third aspect, in another possible implementation, N is 2, the N channels include a first channel and a second channel, a weighted value of the first channel in the first weighting matrix is the same as a weighted value of the first channel in the second weighting matrix, and phase rotation by a preset angle is performed on a weighted value of the second channel in the second weighting matrix relative to a weighted value of the first channel in the first weighting matrix.

With reference to the third aspect or any possible implementation of the third aspect, in another possible implementation, the processing unit is further configured to determine a to-be-corrected phase error if the first phase error is equal to the second phase error, where the to-be-corrected phase error is a difference between the first phase error and a half of the preset angle. The processing unit is specifically configured to correct a phase of the first channel and/or a phase of the second channel based on the to-be-corrected phase error.

With reference to the third aspect or any possible implementation of the third aspect, in another possible implementation, the processing unit is further configured to determine a to-be-corrected phase error if the first phase error is equal to a sum of the second phase error and twice the preset angle, where the to-be-corrected phase error is a sum of the first phase error and a half of the preset angle. The processing unit is specifically configured to correct a phase of the first channel and/or a phase of the second channel based on the to-be-corrected phase error.

With reference to the third aspect or any possible implementation of the third aspect, in another possible implementation, the preset angle is related to a quantity of horizontal-dimensional beams and a beam densification multiple.

With reference to the third aspect or any possible implementation of the third aspect, in another possible implementation, after being combined, the first signal is transmitted by an antenna to the terminal after being amplified by a power amplifier.

With reference to the third aspect or any possible implementation of the third aspect, in another possible implementation, the first signal is a channel state information-reference signal CSI-RS.

The apparatus includes modules configured to perform the method in any one of the first aspect or the possible implementations of the first aspect. The apparatus is a communication apparatus corresponding to the first aspect, and can also achieve beneficial effects brought by the first aspect or any possible implementation of the first aspect. According to a fourth aspect, this application provides a communication apparatus, where the apparatus includes a transceiver unit and a processing unit. The transceiver unit is configured to receive a first signal from a network device, where the first signal is combined after passing through N channels of the network device and then received by the terminal, and N is an integer greater than 1. The processing unit is configured to determine a first precoding matrix based on the first signal, where the first precoding matrix is used to correct phases of some or all of the N channels. The transceiver unit is further configured to send first indication information to the network device, where the first indication information indicates the first precoding matrix.

With reference to the fourth aspect, in a possible implementation, a port quantity of the first precoding matrix is M, and M is an integer greater than or equal to N.

With reference to any one of the fourth aspect or the possible implementations of the fourth aspect, in another possible implementation, the transceiver unit is further configured to receive second indication information from the network device, where the second indication information indicates the terminal to feed back a precoding matrix whose port quantity is M.

With reference to the fourth aspect or any possible implementation of the fourth aspect, in another possible implementation, a rank of the first precoding matrix is 1.

With reference to any one of the fourth aspect or the possible implementations of the fourth aspect, in another possible implementation, the transceiver unit is further configured to receive the second indication information from the network device, where the second indication information indicates the terminal to feed back a precoding matrix whose rank is 1.

The apparatus includes modules configured to perform the method in any one of the second aspect or the possible implementations of the second aspect. The apparatus is a communication apparatus corresponding to the second aspect, and can also achieve beneficial effects brought by the second aspect or any possible implementation of the second aspect.

According to a fifth aspect, this application provides a communication apparatus, including a processor. The processor is coupled to a memory, and may be configured to execute instructions in the memory, to implement the method according to any one of the possible implementations of the first aspect. Optionally, the apparatus further includes the memory. Optionally, the apparatus further includes a communication interface, and the processor is coupled to the communication interface.

In an implementation, the apparatus is a network device. When the apparatus is the network device, the communication interface may be a transceiver or an input/output interface.

In another implementation, the apparatus is a chip configured in a network device. When the apparatus is the chip disposed in the network device, the communication interface may be an input/output interface.

Optionally, the transceiver may be a transceiver circuit. Optionally, the input/output interface may be an input/output circuit.

According to a sixth aspect, this application provides a communication apparatus, including a processor. The processor is coupled to a memory, and may be configured to execute instructions in the memory, to implement the method according to any one of the possible implementations of the second aspect. Optionally, the apparatus further includes the memory. Optionally, the apparatus further includes a communication interface, and the processor is coupled to the communication interface.

In an implementation, the apparatus is a terminal. When the apparatus is the terminal, the communication interface may be a transceiver or an input/output interface.

In another implementation, the apparatus is a chip configured in a terminal. When the apparatus is the chip configured in the terminal, the communication interface may be the input/output interface.

Optionally, the transceiver may be a transceiver circuit. Optionally, the input/output interface may be an input/output circuit.

According to a seventh aspect, this application provides a processor, including an input circuit, an output circuit, and a processing circuit. The processing circuit is configured to receive a signal through the input circuit, and output a signal through the output circuit, so that the processor performs the method in any one of the possible implementations of the first aspect or the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, this application provides a communication apparatus, including a processor and a memory. The processor is configured to read instructions stored in the memory, receive a signal through a receiver, and send a signal through a transmitter, to perform the method in any possible implementation of the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver

The apparatus in the eighth aspect may be a chip, and the processor may be implemented by using hardware or by using software. When implemented by using hardware, the processor may be a logic circuit, an integrated circuit, or the like. When the implemented by using software, the processor may be a general-purpose processor, and is implemented by reading software code stored in the memory. The memory may be integrated into the processor, or may be independently located outside the processor

According to a ninth aspect, this application provides a computer-readable storage medium. The computer-readable storage medium stores a computer program or instructions. When the computer program or the instructions are executed, the method in any possible implementation of the first aspect or the second aspect is implemented.

According to a tenth aspect, this application provides a computer program product, including instructions. When the instructions are run, the method in any possible implementation of any one of the first aspect or the second aspect is implemented.

According to an eleventh aspect, this application provides a communication system. The communication system includes any one of the foregoing communication apparatuses.

## BRIEF DESCRIPTION OF DRAWINGS

FIG. 1 is a schematic diagram of an architecture of a communication system to which embodiments of this application are applied;

FIG. 2 is a schematic diagram of a DAS system in which 4T4R RRUs are combined into two channels;

FIG. 3 is a schematic flowchart of a phase correction method according to this application;

FIG. 4 is a schematic flowchart of another phase correction method according to this application;

FIG. 5 is an example of a phase correction method according to an embodiment of this application;

FIG. 6 is a schematic diagram of phase error estimation precision and spatial domain phase division precision;

FIG. 7 is another example of a phase correction method according to an embodiment of this application;

FIG. 8A and FIG. 8B are a schematic diagram of phase error estimation precision of two measurement feedbacks;

FIG. 9 is a schematic diagram of a structure of a possible communication apparatus according to an embodiment of this application; and

FIG. 10 is a schematic diagram of a structure of a possible communication apparatus according to an embodiment of this application.

## DESCRIPTION OF EMBODIMENTS

The following describes technical solutions of this application with reference to accompanying drawings.

The technical solutions in embodiments of this application may be applied to various communication systems, for example, a 5G mobile communication system, a new radio access technology (new radio access technology, NR) system, an LTE system, an LTE frequency division duplex (frequency division duplex, FDD) system, an LTE time division duplex (time division duplex, TDD) system, a universal mobile communication system (universal mobile telecommunication system, UMTS), or a worldwide interoperability for microwave access (worldwide interoperability for microwave access, WiMAX) communication system. The mobile communication system may include non-standalone (non-standalone, NSA) networking and/or standalone (standalone, SA) networking. Alternatively, the technical solutions provided in this application may be applied to a future communication system, for example, a sixth generation mobile communication system. This is not limited in this application.

The technical solutions provided in this application may also be applied to a machine type communication (machine type communication, MTC) network, a long term evolution-machine type communication technology (Long Term Evolution-machine, LTE-M), a device-to-device (device-to-device, D2D) network, a machine to machine (machine to machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

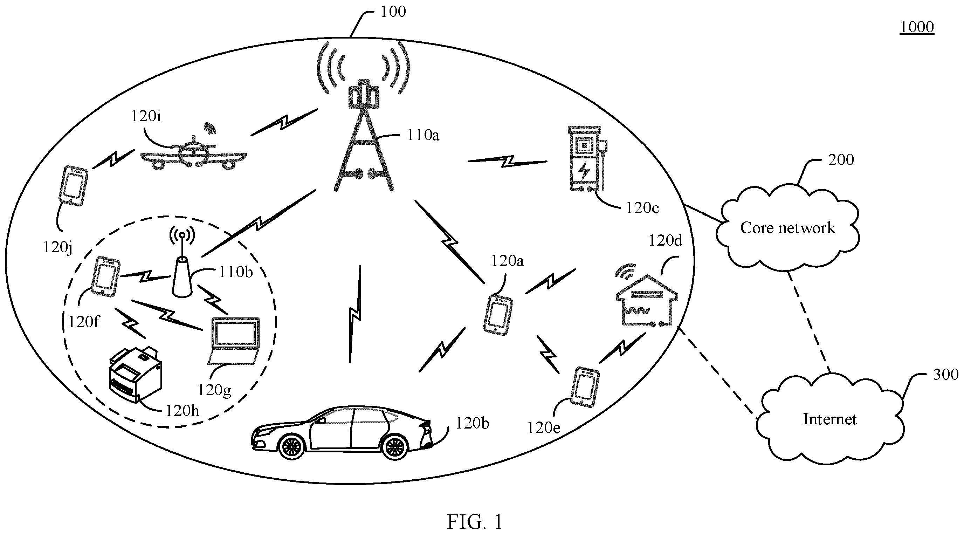

FIG. 1 is a schematic diagram of an architecture of a communication system 1000 to which embodiments of this application are applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a, 120b, 120c, 120d, 120e, 120f, 120g, 120h, 120i, and 120j in FIG. 1). The terminal is connected to the radio access network device in a wireless manner, and the radio access network device is connected to the core network in a wireless or wired manner. A core network device and the radio access network device may be different physical devices that are independent of each other, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. FIG. 1 is only a schematic diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission/reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, an access node in a Wi-Fi system, or the like; or may be a module or unit that completes some functions of a base station, for example, may be a central unit (central unit, CU), a distributed unit (distributed unit, DU), or RRU or baseband unit (baseband unit, BBU). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the radio access network device is uniformly described as a base station below.

The terminal may also be referred to as a terminal device, user equipment (user equipment, UE), a mobile station, a mobile terminal, or the like. The terminal may be widely applied to various scenarios, for example, device-to-device (device-to-device, D2D), vehicle to everything (vehicle to everything, V2X) communication, machine type communication (machine-type communication, MTC), an internet of things (internet of things, IoT), virtual reality, augmented reality, industrial control, self-driving, telemedicine, a smart grid, smart furniture, a smart office, a smart wearable device, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form used by the terminal are not limited in this embodiment of this application.

The base station and the terminal may be at fixed locations, or may be mobile. The base station and the terminal each may be deployed on land, including an indoor or outdoor device, a handheld device, or an in-vehicle device, may be deployed at a water surface, or may be deployed on an airplane, in a balloon, or on a satellite in air. Embodiments of this application impose no limitation on application scenarios of the base station and the terminal.

Roles of the base station and the terminal may be relative. For example, a helicopter or an uncrewed aerial vehicle 120i in FIG. 1 may be configured as a mobile base station. For a terminal 120j that accesses the radio access network 100 by using 120i, the terminal 120i is a base station. However, for the base station 110a, 120i is a terminal, that is, 110a and 120i communicate with each other by using a wireless air interface protocol. Certainly, 110a and 120i may also communicate with each other by using an interface protocol between the base station and the base station. In this case, compared with 110a, 120i is also a base station. Therefore, both the base station and the terminal may be collectively referred to as communication apparatuses. 110a and 110b in FIG. 1 may be referred to as communication apparatuses having a function of a base station. 120a to 120j in FIG. 1 may be referred to as communication apparatuses having a function of a terminal.

Communication may be performed between a base station and a terminal, between base stations, and between terminals by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (such as a chip) in the base station, or may be performed by a control subsystem including a base station function. The control subsystem including a base station function herein may be a control center in application scenarios of the foregoing terminals such as a smart grid, industrial control, intelligent transportation, and a smart city. A function of the terminal may alternatively be performed by a module (such as a chip or a modem) in the terminal, or may be performed by an apparatus including the function of the terminal.

It should be noted that, preferably, the technical solutions provided in this application are applicable to an NR FDD system and a wireless communication scenario in which a terminal supports a Type I codebook in the Release 15/16 protocol.

In buildings, a signal from a macro base station is severely attenuated and cannot provide plenty of coverage. As a result, communication quality of a terminal is severely affected. In this case, an indoor coverage system can effectively improve the communication quality in the building, improve indoor signal coverage, and provide high-quality indoor communication for users.

Currently, there are two types of indoor distributed systems: a DAS and an indoor digital system (digital indoor system, DIS).

(1) DAS: A traditional DAS indoor distributed technology focuses on indoor signal coverage but does not fully consider capacity and user experience. However, with the rapid development of mobile communication, new services such as ultra-HD video, virtual reality, and internet of things communication pose higher requirements on mobile networks for higher bandwidth, higher capacity, and lower latency. The DAS system cannot effectively address the challenges posed by new requirements on indoor solutions.

(2) DIS: Compared with the DAS system, a DIS system is an innovative indoor coverage solution for medium and large-sized indoor coverage scenarios, and mainly uses an optical fiber and a network cable to transmit a digital signal and can support a higher frequency band, which facilitates smooth transition to 5G. In addition, the DIS system features easy deployment, high performance, easy to operate and maintain, and scalability, which can effectively address the challenges of coverage and capacity.

Although the indoor deployment proportion of the DIS system gradually increases due to its many advantages, the DAS system will still be the mainstream deployment mode for indoor distributed coverage for a long time due to the existing DAS inventory constraints. With the large-scale construction of the 5G communication system, transition from an LTE DAS to a 5G DAS needs to be considered. The coverage problem of integrating the 5G DAS into the existing LTE DAS needs to be resolved urgently. Evolution from the LTE DAS 2.3 GHz to the 5G DAS 2.6 GHz is used as an example. If a 5G RRU signal source is directly integrated into the existing LTE DAS network, the coverage of the 5G indoor distributed system is more than 3 dB lower than that of the LTE indoor distributed system because a 5G bandwidth is much higher Therefore, power of the 5G indoor distributed system needs to be enhanced to achieve the same coverage as the LTE indoor distributed system.

A possible manner of enhancing the power of the 5G indoor distributed system is to combine a plurality of channels of the RRU by using a combiner to increase the power Before combining different channels of an RRU, phases of the channels need to be corrected. Otherwise, power cannot be superimposed. Currently, a method for correcting phases of different channels of the RRU depends on hardware correction, and a hardware correction network is relatively complex. In addition, currently, only some RRUs (for example, an 8T8R RRU and a module above) have a hardware correction network, and RRUs (for example, a 4T4R RRU and a 2T2R RRU module) that do not have a hardware correction network cannot implement phase correction between different channels. However, if correction network reconstruction is directly performed on the RRU that does not have the hardware correction network, high reconstruction costs are incurred.

For the foregoing problem, this application provides a phase correction method, to help enhance transmit power of an indoor distributed system, thereby enhancing coverage of the indoor distributed system. In this application, soft correction of phases of a plurality of combined channels of the network device may be implemented by using an air interface feedback of a terminal, so that it can be ensured that the phases of the plurality of combined channels are consistent, and transmit power can be increased in a manner of combining the plurality of channels, thereby enhancing coverage of an indoor distributed system.

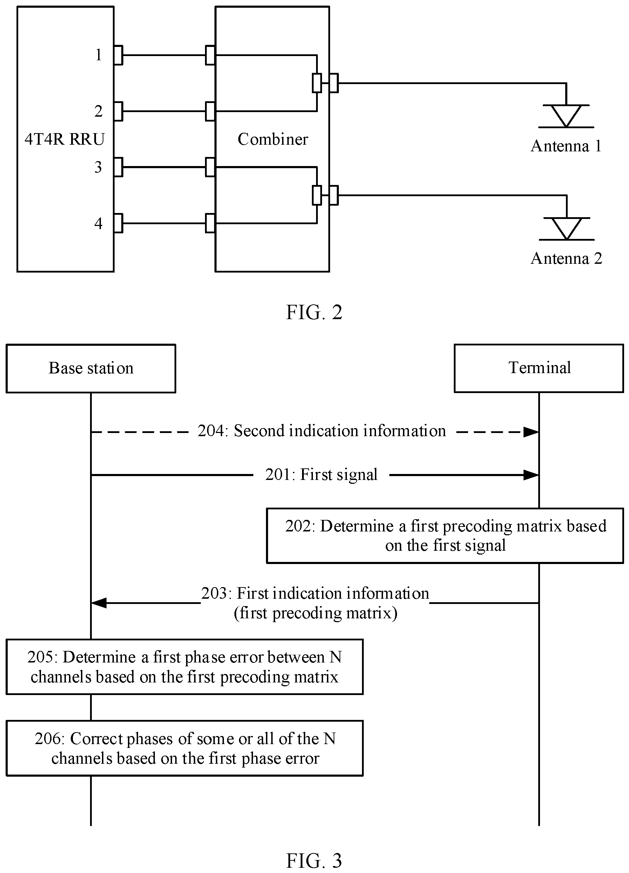

FIG. 2 is a schematic diagram of a DAS system having a combination function. It should be noted that FIG. 2 merely uses an example in which a 4T4R RRU is combined into two channels, and a specific value or name thereof constitutes no limitation on the technical solutions of this application.

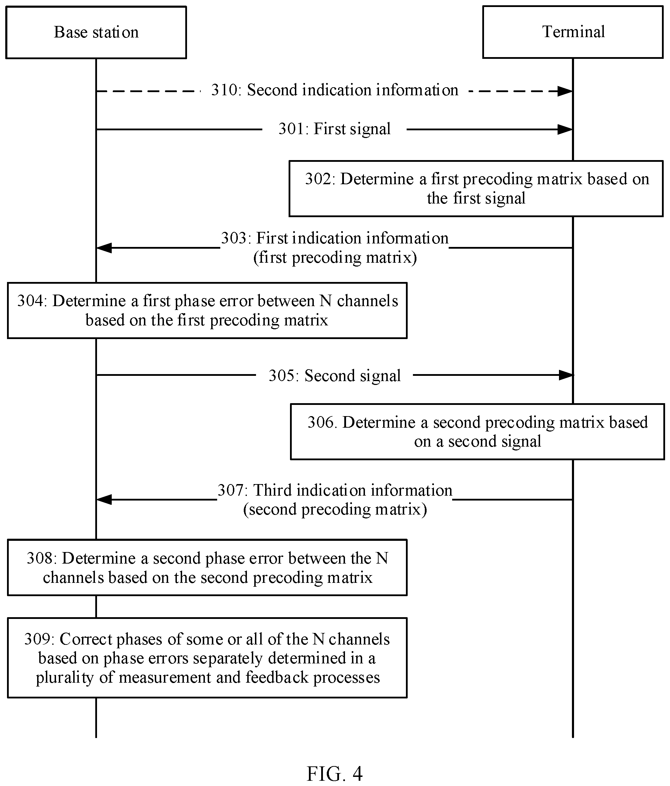

The RRU may be configured to convert a received digital signal into a radio frequency signal, and send the radio frequency signal to an antenna apparatus, or receive a radio frequency signal from the antenna apparatus, convert the radio frequency signal into a digital signal, and transmit the digital signal to a baseband control unit (not shown in FIG. 2). The RRU may include a plurality of radio frequency channels, for example, radio frequency channels 1, 2, 3, and 4. The plurality of radio frequency channels may separately perform receiving and/or sending, to implement multiple-input multiple-output of the RRU. For example, the 4T4R RRU shown in FIG. 4 may include four radio frequency channels, and the four radio frequency channels may perform receiving and/or sending to implement 4T4R of the RRU. It should be noted that the radio frequency channel herein may be a circuit channel in the RRU, for example, a circuit channel in a transceiver. The circuit channel may include one or more electronic components. A plurality of radio frequency channels may share a circuit channel, or each radio frequency channel may include a separate circuit channel. Alternatively, the radio frequency channel herein may refer to a logical channel in the RRU, and conversion between a baseband signal and a radio frequency signal may be completed in the logical channel. The combiner may be configured to combine a received radio frequency signal, and send a combined radio frequency signal to an antenna. It should be noted that the combiner may be separately disposed independent of the RRU, or may be integrated into the RRU. This is not specifically limited in this application. The antenna may transmit the received radio frequency signal, or receive an external radio frequency signal and transmit the radio frequency signal to the RRU.

As shown in FIG. 2, the 4T4R RRU may be combined into two channels by using a combiner. A radio frequency signal of a channel 1 and a radio frequency signal of a channel 2 are combined into one signal by using the combiner and sent through an antenna 1. A radio frequency signal of a channel 3 and a radio frequency signal of a channel 4 are combined into one signal by using the combiner and sent through an antenna 2.

It should be noted that the RRU may be connected to a BBU, and the phase correction method provided in this application may be performed in the BBU.

The following describes the phase correction method provided in this application.

FIG. 3 is a schematic flowchart of the phase correction method according to this application. The method shown in FIG. 3 may be performed by a base station and a terminal, or may be performed by a module or a unit (for example, a circuit, a chip, or a system on chip (system on chip, SOC)) in the base station and the terminal. The following describes the technical solutions of this application by using an example in which execution bodies are the base station and the terminal. The method in FIG. 3 may include at least some content of the following content.

Step 201: A base station sends a first signal to a terminal.

The first signal is used to determine a first precoding matrix. The first signal is combined after passing through N channels, and is sent to the terminal. For example, the first signal is combined after passing through the N channels, and then is transmitted to the terminal by an antenna, where N is an integer greater than 1. The N channels are N channels that need to be combined, and the N channels may be radio frequency channels shown in FIG. 2.

Optionally, after being combined, the first signal is amplified by a power amplifier, and then transmitted by the antenna to the terminal.

Optionally, the first signal is a downlink reference signal. For example, the first signal is a CSI-RS.

If there is a phase error between the N channels, the first signal is affected by the phase error in a transmission process, so that there is a phase error between signals of the N channels included in the first signal.

In some implementations, the first signal is weighted by using a first weighting matrix before passing through the N channels. The first weighting matrix includes N weighted values, and the N weighted values may be in a one-to-one correspondence with the N channels.

Optionally, the first weighting matrix may further include M-N 0s, and M is an integer greater than or equal to N. For example, the base station processes M downlink reference signal sequences based on the first weighting matrix to obtain a first to-be-sent sequence. Further, the base station generates the first signal based on the first to-be-sent sequence. The first weighting matrix is used to process the M downlink reference signal sequences, so that the first to-be-sent sequence actually includes N valid signals. For example, the base station processes M*1 downlink reference signal sequences based on 1*M matrices to obtain the first to-be-sent sequence. Because only N weighted values in the 1*M matrices are valid, the first to-be-sent sequence actually includes the N valid signals.

Step 202: After receiving the first signal, the terminal determines the first precoding matrix based on the first signal.

The first precoding matrix is used to correct phases of some or all of the N channels.

In some implementations, the terminal performs channel estimation based on the first signal, and then selects, from a prestored precoding matrix set based on an estimation result, the first precoding matrix that best matches the estimation result.

Step 203: The terminal sends the first indication information to the base station.

The first indication information may indicate the first precoding matrix.

In some implementations, the first indication information may be a precoding matrix indicator (precoding matrix indicator, PMI), and the terminal may feed back an index of the first precoding matrix to the base station by using the PMI.

Optionally, the first precoding matrix is a precoding matrix whose port quantity is M, where M is an integer greater than or equal to N. If M is greater than N, a port quantity of a precoding matrix fed back by the terminal is greater than a quantity of channels for transmitting a signal. In other words, the terminal may feed back a precoding matrix with higher precision, thereby helping improve phase estimation precision.

Optionally, the first precoding matrix is a precoding matrix whose rank is 1. When the rank is 1, this helps the terminal determine a best signal stream, improve accuracy of signal estimation, select a more matched precoding matrix, and improve accuracy of phase estimation.

Optionally, the first precoding matrix is a precoding matrix whose rank is 1 and whose port quantity is M, where M is an integer greater than or equal to N. In other words, the terminal may feed back a precoding matrix with higher accuracy and higher precision, thereby helping improve phase estimation precision.

Optionally, the rank and/or the port quantity of the precoding matrix fed back by the terminal may be predefined, for example, predefined in a protocol.

Optionally, the rank and/or the port quantity of the precoding matrix fed back by the terminal may also be determined based on an indication of the base station. In this case, before step 202, step 204 may be further performed.

Step 204: The base station sends second indication information to the terminal.

Correspondingly, the terminal receives the second indication information from the base station.

The second indication information indicates the terminal to feed back a precoding matrix whose rank is 1, or indicates the terminal to feed back a precoding matrix whose port quantity is M, or indicates the terminal to feed back a precoding matrix whose rank is 1 and whose port quantity is M. Optionally, the second indication information may be broadcast information.

Optionally, the rank and/or the port quantity of the precoding matrix fed back by the terminal may also be determined by the terminal.

Step 204 is optional, and may be performed before step 202. A sequence between step 201 and step 204 is not limited in this application.

Step 205: After receiving the first indication information, the base station determines a first phase error between the N channels based on the first precoding matrix indicated by the first indication information.

In some implementations, the base station determines the first precoding matrix based on the received first indication information, and further determines the first phase error between the N channels based on the first precoding matrix. For example, the first indication information is the PMI. The base station selects a target precoding matrix based on an index in the PMI, and then estimates, based on the target precoding matrix, the first phase error between the N channels before combination. The target precoding matrix is a precoding matrix determined by the base station. The target precoding matrix may be the first precoding matrix indicated by the PMI. Specifically, after receiving the PMI, the base station finds, based on the index in the PMI, a corresponding first precoding matrix from a precoding matrix set that is the same as that of the terminal. Alternatively, the target precoding matrix may be another precoding matrix related to the first precoding matrix, for example, a precoding matrix similar to or similar to the first precoding matrix The following describes the technical solutions of this application by using an example in which the target precoding matrix is the first precoding matrix.

In this embodiment of this application, the first phase error between the N channels may include a phase error of one channel of the N channels relative to another channel of the N channels.

In an example, a phase of a channel may be selected as a reference, and the first phase error between the N channels may be a phase error of N-1 channels relative to the channel used as a reference. For example, the N channels are a channel 1 to a channel 4. The channel 1 is used as a reference. The first phase error between the four channels may include a phase error of the channel 2 relative to the channel 1, a phase error of the channel 3 relative to the channel 1, and a phase error of the channel 4 relative to the channel 1. Alternatively, the channel 3 is used as a reference. The first phase error between the four channels includes a phase error of the channel 1 relative to the channel 3, a phase error of the channel 2 relative to the channel 3, a phase error of the channel 4 relative to the channel 3, and the like.

In another example, a phase of a channel may not be selected as a unified reference, and the first phase error between the N channels may be a phase error of the N-1 channels relative to different channels. For example, the N channels are a channel 1 to a channel 4. The first phase error between the four channels may include a phase error of the channel 2 relative to the channel 1, a phase error of the channel 3 relative to the channel 2, and a phase error of the channel 4 relative to the channel 3.

In another example, with reference to the foregoing two examples, the first phase error between the N channels may include phase errors of some channels relative to one channel and phase errors of some channels relative to another channel. For example, the N channels are a channel 1 to a channel 4. The first phase error between the four channels includes a phase error of the channel 2 relative to the channel 1, a phase error of the channel 3 relative to the channel 1, a phase error of the channel 4 relative to the channel 2, and the like.

In another example, a phase value may be further selected as a reference, and the phase value may not be a phase of the N channels. In this case, the first phase error between the N channels may include phase errors of the N channels respectively relative to the phase value used as the reference. For example, the N channels are a channel 1 to a channel 4. The phase value used as the reference may be R. Phases of R and the four channels are different. In this case, the first phase error between the four channels may include a phase error of the channel 1 relative to R, a phase error of the channel 2 relative to R, a phase error of the channel 3 relative to R, a phase error of the channel 4 relative to R, and the like.

It can be learned from the foregoing plurality of examples that the first phase error between the N channels may directly or indirectly determine a phase error between any two channels between the N channels.

Step 206: The base station corrects phases of some or all of the N channels based on the first phase error

The some or all of the N channels are channels on which phase correction needs to be performed. For example, the N channels are a channel 1 to a channel 4. The channel 1 is used as a reference. A phase error of the channel 2 relative to the channel 1 is 0. A phase error of the channel 3 relative to the channel 1 is B. A phase error of the channel 4 relative to the channel 1 is C. In this case, phases of the channel 3 and the channel 4 in the four channels need to be corrected.

In some implementations, the base station compensates for phases of some or all of the N channels based on the first phase error, so that the phases of the N channels keep consistent, thereby correcting the phases of the some or all of the N channels. For example, the N channels are a channel 1 to a channel 4. The channel 1 is used as a reference. A phase of the channel 1 is A. A phase error of the channel 2 relative to the channel 1 is 0, a phase error of the channel 3 relative to the channel 1 is B, and a phase error of the channel 4 relative to the channel 1 is C. In this case, the base station may compensate B for the phase of the channel 3 and compensate C for the phase of the channel 4, so that phases of the four channels are all A.

It should be noted that the base station may directly correct the phases of the some or all of the N channels based on the first phase error, or may process the first phase error, for example, obtain another phase error based on the first phase error, and then correct the phases of the some or all of the N channels based on the another phase error. This is not limited in this application.

According to the technical solutions of this application, soft correction of phases between a plurality of channels before combination may be implemented by using an air interface feedback of the terminal. In addition, compared with directly increasing the transmit power, this helps reduce costs.

The foregoing describes single phase error estimation. In some other embodiments of this application, phase error estimation precision may be further improved by performing phase estimation for a plurality of times until a precision requirement is met, to implement channel phase correction before combination in an NR indoor distributed DAS system. The following describes these embodiments in detail.

FIG. 4 is a schematic flowchart of another phase correction method according to this application. Similarly, the method shown in FIG. 4 may be performed by a base station and a terminal, or may be performed by a module or a unit (for example, a circuit, a chip, or a system on chip) in the base station and the terminal. The following describes the technical solutions of this application by using an example in which execution bodies are the base station and the terminal. The method in FIG. 4 may include at least some content of the following content.

Step 301: A base station sends a first signal to a terminal.

Step 302: After receiving the first signal, the terminal determines the first precoding matrix based on the first signal.

Optionally, the first precoding matrix in this embodiment is a precoding matrix whose port quantity is M, where M is an integer greater than or equal to N. Optionally, the first precoding matrix is a precoding matrix whose rank is 1. Optionally, the first precoding matrix is a precoding matrix whose rank is 1 and whose port quantity is M, where M is an integer greater than or equal to N.

Optionally, the rank and/or the port quantity of the precoding matrix fed back by the terminal may be predefined, for example, predefined in a protocol. Optionally, the rank and/or the port quantity of the precoding matrix fed back by the terminal may also be determined based on an indication of the base station. In this case, before step 302, step 310 may be further performed. Step 310 and step 206 may be mutually referenced and referenced, and details are not described herein again. Optionally, the rank and/or the port quantity of the precoding matrix fed back by the terminal may also be determined by the terminal.

Step 303: The terminal sends the first indication information to the base station.

Step 304: After receiving the first indication information, the base station determines a first phase error between N channels based on the first precoding matrix indicated by the first indication information.

Steps 301 to 304 and steps 201 to 204 may be mutually referenced and referenced, and details are not described herein again.

Step 305: The base station sends a second signal to the terminal.

The second signal is used to determine a second precoding matrix. The second signal is combined after passing through the N channels, and is sent to the terminal. For example, the second signal is combined after passing through the N channels, and then is transmitted to the terminal by an antenna, where N is an integer greater than 1. The N channels are N channels that need to be combined, and the N channels may be radio frequency channels shown in FIG. 2.

Optionally, after being combined, the second signal is amplified by a power amplifier, and then transmitted by the antenna to the terminal.

Optionally, the second signal is a downlink reference signal. For example, the second signal is a CSI-RS.

If there is a phase error between the N channels, the second signal is affected by the phase error in a transmission process, so that there is a phase error between signals of the N channels included in the second signal.

Step 306: After receiving the second signal, the terminal determines the second precoding matrix based on the second signal.

The second precoding matrix is used to correct phases of some or all of the N channels.

In some implementations, the terminal performs channel estimation based on the second signal, and then selects, from a prestored precoding matrix set based on an estimation result, the second precoding matrix that best matches the estimation result.

Optionally, the second precoding matrix in this embodiment is a precoding matrix whose port quantity is M, where M is an integer greater than or equal to N. Optionally, the second precoding matrix is a precoding matrix whose rank is 1. Optionally, the second precoding matrix is a precoding matrix whose rank is 1 and whose port quantity is M, where M is an integer greater than or equal to N.

Step 307: The terminal sends third indication information to the base station.

The third indication information may indicate the second precoding matrix.

In some implementations, the third indication information may be a PMI, and the terminal may feed back an index of the second precoding matrix to the base station by using the PMI.

Step 308: After receiving the third indication information, the base station determines N-1 second phase errors based on the second precoding matrix indicated by the third indication information.

It should be noted that FIG. 3 shows only two measurement and feedback processes. Actually, more measurement and feedback processes may be performed between the base station and the terminal, to meet a precision requirement of phase estimation.

For more detailed descriptions of the measurement feedback process, refer to related descriptions in FIG. 3. Details are not described herein again.

Step 309: The base station corrects phases of some or all of the N channels based on the phase errors separately determined in a plurality of measurement and feedback processes.

For example, two measurement feedback processes are performed. The base station corrects the phases of the some or all of the N channels based on the first phase error and the second phase error.

In this embodiment, before passing through the N channels, the first signal is weighted by using a first weighting matrix, and the second signal is weighted by using a second weighting matrix. The first weighting matrix includes weighted values respectively corresponding to the N channels, and the second weighting matrix includes weighted values respectively corresponding to the N channels. The second weighting matrix may be the same as or different from the first weighting matrix.

If the second weighting matrix is different from the first weighting matrix, it may be set that phase rotation by a preset angle is performed on weighted values of some channels in the second weighting matrix relative to weighted values of same channels in the first weighting matrix.

For example, N is 2. The N channels include a first channel and a second channel. A weighted value of the first channel in the first weighting matrix is the same as a weighted value of the first channel in the second weighting matrix. Phase rotation by a preset angle is performed on a weighted value of the second channel in the second weighting matrix relative to the weighted value of the first channel in the first weighting matrix.

Optionally, the preset angle is related to a quantity N1 of horizontal-dimensional beams and a beam densification multiple O1. For example, when the terminal feeds back a precoding matrix whose port quantity is eight, N1 is 4, O1 is 4, and the preset angle may be $360/N1/O1/2 = 11.25°$.

The following describes step 309 in detail by using an example in which N is 2 and two measurement feedbacks are performed. The N channels include the first channel and the second channel.

In some implementations, if phase rotation by a preset angle is performed on the weighted value of the second channel in the second weighting matrix relative to the weighted value of the first channel in the first weighting matrix, the base station may determine a to-be-corrected phase error based on the first phase error and the second phase error in the following manner, and compensate for the phase error between the first channel and the second channel based on the to-be-corrected phase error, to implement phase correction on the first channel and the second channel. The to-be-corrected phase error is a final estimation result of the phase error between the first channel and the second channel.

    (1) If the first phase error is equal to the second phase error, the base station determines that the to-be-corrected phase error is a difference between the first phase error and a half of the preset angle.

    (2) If the first phase error is equal to a sum of the second phase error and twice the preset angle, the base station determines that the to-be-corrected phase error is a sum of the first phase error and a half of the preset angle.

(3) If the first phase error is neither equal to the second phase error nor equal to a sum of the second phase error and twice the preset angle, the base station determines that phase error estimation fails. Optionally, the base station and the terminal may perform the foregoing steps 301 to 308 again.

The foregoing describes that the base station determines the to-be-corrected phase error based on the first phase error and the second phase error, and corrects the phases of the some or all of the N channels based on the to-be-corrected phase error.

If the base station and the terminal continue to perform a third measurement feedback process, a fourth measurement feedback process, ..., and an $n^{th}$ measurement feedback process based on the foregoing two measurement feedback processes, the base station may determine the to-be-corrected phase error based on the first phase error, the second phase error, ..., and the $n^{th}$ phase error, and correct the phases of the some or all of the N channels based on the to-be-corrected phase error, where n is an integer greater than 2.

In an example, the to-be-corrected phase error $\Delta\hat{\varphi}$ meets:

(1) if $\Delta\hat{\varphi}_n$ is equal to $\Delta\hat{\varphi}_1$, the base station determines that

$$\Delta\hat{\varphi} = \Delta\beta_{n-1} - \frac{\alpha}{2^{n-1}} \;;$$

(2) if $\Delta\hat{\varphi}_n$ is equal to $\Delta\hat{\varphi}_1 + 2\alpha$, the base station determines that

$$\Delta\hat{\varphi} = \Delta\beta_{n-1} + \frac{\alpha}{2^{n-1}} \;; \text{ and}$$

(3) if $\Delta\hat{\varphi}_n$ is neither equal to $\Delta\hat{\varphi}_1$ nor equal to $\Delta\hat{\varphi}_1 + 2\alpha$, current measurement fails, and step n measurement feedback processes are performed again.

$\Delta\hat{\varphi}_n$ is an $n^{th}$ phase error determined in an $n^{th}$ measurement feedback process. $\Delta\beta_{n-1}$ is a phase error estimation result determined based on previous (n-1) measurement feedback processes. $\alpha$ is a preset angle, and $\alpha = \dfrac{360}{N1 \cdot O1 \cdot 2}$. N1 is a quantity of horizontal-dimensional beams. O1 is a beam densification multiple, and n is an integer greater than 2.

In the $n^{th}$ measurement feedback process, an angle $\theta_n$ by which a phase of a weighted value of the second channel in an $n^{th}$ weighting matrix is rotated relative to a weighted value of the second channel in the first weighting matrix meets:

$$(1)\, \text{if } \Delta\beta_{n-1} = \Delta\beta_{n-2} + \frac{\alpha}{2^{n-2}}, \; \theta_n = \theta_{n-1} - \frac{\alpha}{2^{n-2}}$$

; and

$$(2)\, \text{if } \Delta\beta_{n-1} = \Delta\beta_{n-2} - \frac{\alpha}{2^{n-2}}, \; \theta_n = \theta_{n-1} + \frac{\alpha}{2^{n-2}}.$$

$\Delta\beta_{n-2}$ is a phase error estimation result determined based on previous n-2 measurement and feedback processes. $\theta_{n-1}$ is an angle of phase rotation of the weighted value of the second channel in an $(n-1)^{th}$ weighting matrix relative to the weighted value of the second channel in the first weighting matrix in an $(n-1)^{th}$ measurement and feedback process.

It should be noted that, in a possible implementation, if N is an integer greater than 2, that is, phase correction needs to be performed on three or more channels, to-be-corrected phase errors of the two channels may be determined by comparing the first phase error obtained in the first measurement and feedback process of the two channels with an $n^{th}$ phase error obtained in an $n^{th}$ information measurement and feedback process of the two channels. For example, if the N channels include a channel 1, a channel 2, and a channel 3, it is assumed that the channel 1 is used as a reference. After the first measurement and feedback process, a first phase error between the three channels is obtained. The first phase error includes a first phase error between the channel 2 and the channel 1 and a first phase error between the channel 3 and the channel 1. After a second measurement and feedback process, a second phase error between the channel 2 and the channel 1 and a second phase error between the channel 3 and the channel 1 are obtained. A to-be-corrected phase error between the channel 2 and the channel 1 may be determined by comparing the first phase error between the channel 2 and the channel 1 with the second phase error between the channel 2 and the channel 1. A to-be-corrected phase error between the channel 3 and the channel 1 may be determined by comparing the first phase error between the channel 3 and the channel 1 with the second phase error between the channel 3 and the channel 1.

In some other implementations, if the first weighting matrix is the same as the second weighting matrix, the base station may use an average value of a plurality of phase errors obtained through a plurality of times of measurement as a final measurement result of the phase error between the first channel and the second channel.

In this way, in this embodiment, a plurality of measurement feedbacks may be performed to improve phase error estimation precision until a precision requirement is met, thereby implementing channel phase correction before combination in an NR indoor distributed DAS system.

The following describes the technical solutions of this application with reference to specific examples.

Example 1:

In this example, based on the DAS system in which the 4T4R RRU is combined into two channels shown in FIG. 2, a precoding matrix in which a phase error between a channel 1 and a channel 2 is corrected, a rank (rank) fed back by a terminal is 1, and a port (port) quantity is 8 is used as an example for description.

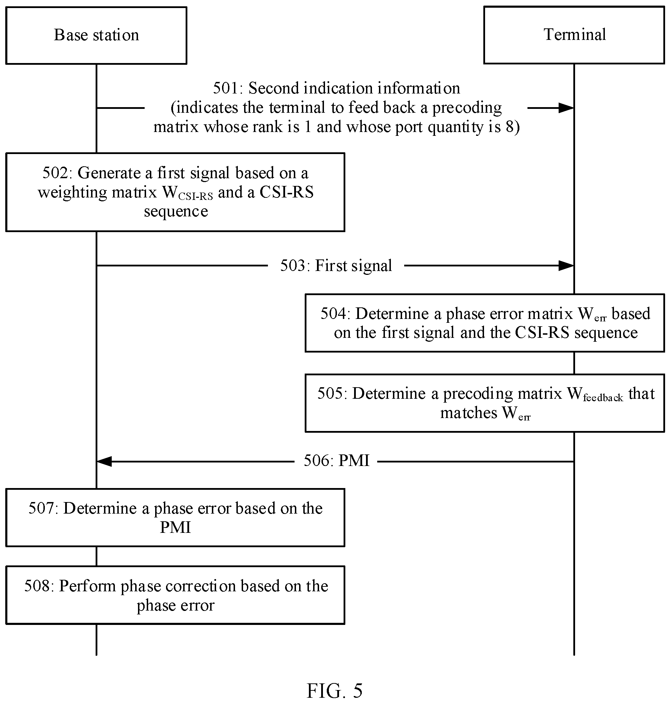

FIG. 5 is an example of a phase correction method according to an embodiment of this application.

Step 501: A base station sends second indication information to a terminal.

The second indication information indicates the terminal to feed back a precoding matrix whose rank is 1 and whose port quantity is 8.

For example, the base station may send the second indication information to the terminal by using higher layer signaling or physical layer signaling. For example, the base station may send the second indication information to the terminal by using RRC signaling, MAC signaling, DCI, or the like.

Step 502: The base station generates a first signal based on a weighting matrix $W_{CSI-RS}$ and a CSI-RS sequence.

The weighting matrix $W_{CSI-RS}$ herein may correspond to the first matrix in step 201, and the CSI-RS sequence may correspond to the downlink reference signal sequence in step 201.

For example, the base station sets the weighting matrix of the CSI-RS whose port quantity is 8 as follows;

$$W_{CSI-RS} = \begin{bmatrix} 1 & 1 & 0 & 0 & 0 & 0 & 0 & 0 \end{bmatrix}$$

$W_{CSI-RS}$ is a 1x8 matrix, 1 indicates one antenna, and 8 indicates eight ports. In $W_{CSI-RS}$, a channel corresponding to an item whose value is 1 is the channel for transmitting signals. In this example, the channels for transmitting signals are a channel 1 and a channel 2.

In this case, the first signal may be represented as:

$$S(t) = W_{CSI-RS} \begin{bmatrix} x_1(t) \\ x_2(t) \\ \dots \\ x_8(t) \end{bmatrix} = x_1(t) + x_2(t)$$

"·" represents matrix point multiplication. $x_n(t)$ is a transmit signal of an $n^{th}$ port. The transmit signal is a CSI-RS. Signals between the ports are code division multiplexed and are in a pairwise orthogonal manner. n is a positive integer greater than 0 and less than 9.

Step 503: The base station sends the first signal to the terminal.

The first signal is combined after passing through the channel 1 and the channel 2, and is transmitted by an antenna 1 to the terminal.

If a phase error exists between the channel 1 and the channel 2, the first signal is affected by the phase error between the channel 1 and the channel 2 in a transmission process. An actual transmit signal (that is, an actual first signal) of the antenna 1 may be represented as:

$$\hat{S}(t) = (W_{CSI-RS} \cdot W_{err}) \begin{bmatrix} x_1(t) \\ x_2(t) \\ \dots \\ x_8(t) \end{bmatrix} = x_1(t) + e^{j\Delta\varphi_0} x_2(t)$$

"·" represents matrix point multiplication. $x_n(t)$ is the transmit signal of the $n^{th}$ port. The signals between the ports are code division multiplexed and are in a pairwise orthogonal manner. n is a positive integer greater than 0 and less than 9. $W_{err}$ is a phase error matrix, which may be represented as:

$$W_{err} = \begin{bmatrix} 1 & e^{j\Delta\varphi_0} & 0 & 0 & 0 & 0 & 0 & 0 \end{bmatrix}$$

$\Delta\varphi_0$ is an actual phase error between the channel 1 and the channel 2.

Step 504: After receiving the first signal from the base station, the terminal determines a phase error matrix $W_{err}$ based on the first signal and the CSI-RS sequence.

It is assumed that a signal received by the terminal is $\hat{S}(t)$. The terminal may parse $\hat{S}(t)$ based on a locally stored CSI-RS sequence to obtain the phase error matrix.

For example, the terminal parses the first signal according to the following formula, to determine the phase error matrix:

$$\int \hat{S}^*(t) \cdot x_1(t)dt = 1$$

$$\int \hat{S}^*(t) \cdot x_2(t)dt = e^{j\Delta\varphi_0}$$

$$\dots$$

$$\int \hat{S}^*(t) \cdot x_8(t)dt = 0$$

" *" represents a complex number conjugate. According to the foregoing formula, the terminal obtains a demodulation vector [1, $e^{j\Delta\varphi_0}$, 0, 0, 0, 0, 0, 0], that is, the terminal determines the phase error matrix

$$W_{err} = \begin{bmatrix} 1 & e^{j\Delta\varphi_0} & 0 & 0 & 0 & 0 & 0 & 0 \end{bmatrix}.$$

Step 505: The terminal selects a precoding matrix $W_{feedback}$ that matches the phase error matrix $W_{err}$ determined in step 504.

For example, the terminal determines, based on the rank and the port quantity that are indicated by the second indication information in step 501, that a precoding matrix set is a precoding matrix set whose rank is 1 and whose port quantity is 8, and then the terminal selects, from precoding aggregation, a precoding matrix that has a maximum inner product with the phase error matrix. In other words, the precoding matrix selected by the terminal is a precoding matrix that has the maximum inner product with the phase error matrix, has a rank = 1, and has a port quantity = 8.

Step 506: The terminal sends a PMI to the base station.

The PMI is used to indicate the precoding matrix selected in step 505.

For example, the PMI carries an index of the precoding matrix.

Step 507: After receiving the PMI of the terminal, the base station determines a phase error between the channel 1 and the channel 2 based on the PMI.

For example, the base station determines the precoding matrix based on the index of the precoding matrix indicated by the PMI, and further determines the phase error between the channel 1 and the channel 2 based on the precoding matrix. It is assumed that the base station determines that the precoding matrix fed back by the terminal is $W_{feedback}$. The phase error between the channel 1 and the channel 2 may be estimated as:

$$\Delta\hat{\varphi} = \arg\left\{ W_{feedback}(2) / W_{feedback}(1) \right\}$$

$W_{feedback}(m)$ represents an $m^{th}$ element of $W_{feedback}$, m = 1 or 2, and arg {·} represents taking a complex number phase.

Step 508: The base station compensates for the phase error between the channel 1 and the channel 2 based on the phase error determined in step 507, to implement phase correction between the channel 1 and the channel 2.

For example, the base station may set $W_{CSI\text{-}RS}$ = [1 $e^{-j\Delta\hat{\varphi}}$ 0 0 0 0 0 0]. In this way, a signal actually sent by the base station subsequently may be represented as:

$$\hat{S}(t) = (W_{CSI-RS} \cdot W_{err}) \begin{bmatrix} x_1(t) \\ x_2(t) \\ \dots \\ x_8(t) \end{bmatrix} = x_1(t) + e^{j\Delta\varphi_0} e^{-j\Delta\hat{\varphi}} x_2(t) = x_1(t) + e^{j(\Delta\varphi_0 - \Delta\hat{\varphi})} x_2(t)$$

If the precoding matrix fed back by the terminal is accurate enough, $\Delta\hat{\varphi}$ may be close to $\Delta\varphi_0$, to implement phase correction between the channel 1 and the channel 2.

It should be noted that a moment at which the base station performs step 501 is not limited in this application, provided that the moment is before step 504. It should be further noted that step 501 and step 204 may be mutually referenced, step 503 and step 201 may be mutually referenced, step 504 and step 505 and step 202 may be mutually referenced, step 506 and step 203 may be mutually referenced, step 507 and step 205 may be mutually referenced, and step 508 and step 206 may be mutually referenced.

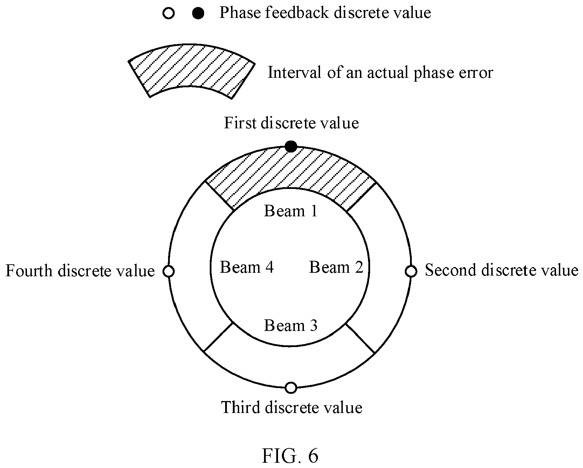

In Example 1, inter-channel phase soft correction before combination is implemented by using a PMI feedback of an air interface of a terminal. Compared with directly increasing transmit power, this helps reduce costs. The phase error estimation precision is related to precision of spatial domain phase division. The phase precision of spatial domain division in a protocol codebook is ±360/N1/O1/2. N1 is a quantity of horizontal-dimensional beams. O1 is a beam densification multiple. For description and understanding, an example in which the spatial domain phase is divided into four intervals (that is, N1 * O1 = 4) is used to describe a relationship between phase error estimation precision and precision of spatial domain phase division. As shown in FIG. 6, the spatial domain phase is divided into four intervals. The four intervals are in a one-to-one correspondence with four phase discrete values. The four phase discrete values correspond to four different precoding matrices. The four intervals are respectively corresponding to a beam 1 to a beam 4. If a precoding matrix that matches the phase error matrix is a precoding matrix corresponding to the beam 1, the base station may determine that a real phase error falls within the interval of the first discrete value ±360/4/2. In other words, phase error estimation with precision of ±360/4/2=±45° can be implemented. In Example 1, the base station indicates the terminal to feed back a PMI whose rank is 1 and whose port quantity is 8. In this case, N1 is 4, and O1 is 4. Therefore, in Example 1, the base station can implement initial phase error estimation within ±11.25° precision by using the PMI fed back by the terminal. Compared with terminal codebook feedback of 2 ports, initial phase error estimation precision can be greatly improved.

Example 2:

In this example, based on the DAS system in which the 4T4R RRU is combined into two channels shown in FIG. 2, a precoding matrix in which a phase error between a channel 1 and a channel 2 is corrected, a rank fed back by a terminal is 1, and a port (port) quantity is 8 is used as an example for description.

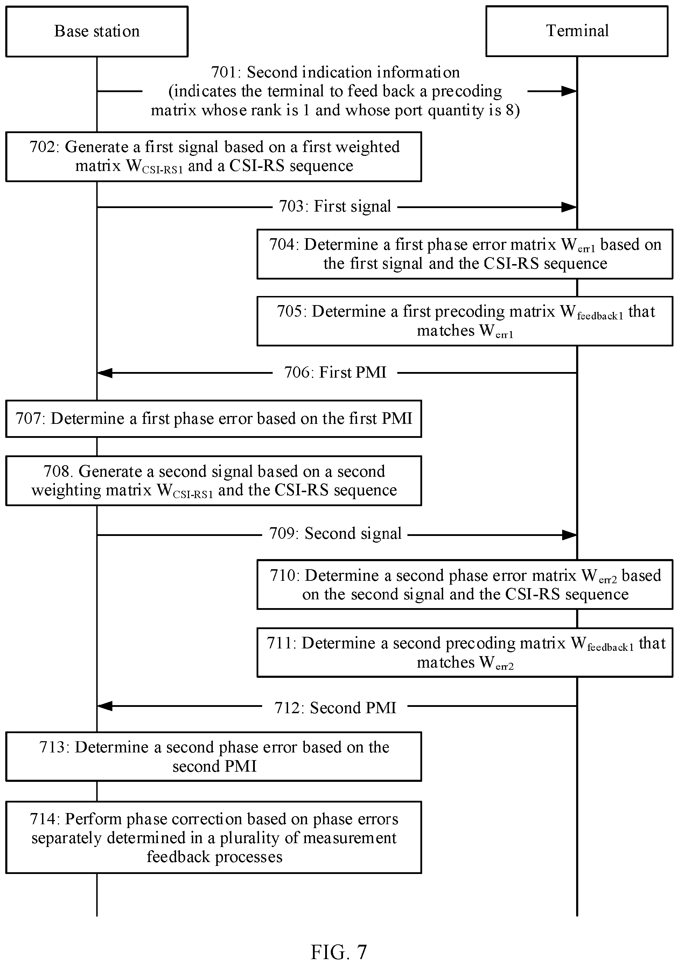

FIG. 7 is another example of a phase correction method according to an embodiment of this application.

Step 701: A base station sends second indication information to a terminal.

The second indication information indicates the terminal to feed back a precoding matrix whose rank is 1 and whose port quantity is 8.

For example, the base station may send the second indication information to the terminal by using higher layer signaling or physical layer signaling. For example, the base station may send the second indication information to the terminal by using RRC signaling, MAC signaling, DCI, or the like.

(1) First measurement feedback: steps 702 to 707.

Step 702: The base station generates a first signal based on a first weighting matrix $W_{CSI\text{-}RS_1}$ and a CSI-RS sequence.

The weighting matrix $W_{CSI\text{-}RS_1}$ herein may correspond to the first weighting matrix in FIG. 4, and the CSI-RS sequence may correspond to the downlink reference signal sequence in FIG. 4.

Step 703: The base station sends the first signal to the terminal.

Step 704: After receiving the first signal from the base station, the terminal determines a first phase error matrix $W_{err_1}$ based on the first signal and the CSI-RS sequence.

Step 705: The terminal selects a first precoding matrix $W_{feedback_1}$ that matches the first phase error matrix $W_{err_1}$ determined in step 704.

Step 706: The terminal sends the first PMI to the base station.

Step 707: After receiving the first PMI of the terminal, the base station determines a first phase error $\hat{\Delta\varphi}_1$ between the channel 1 and the channel 2 based on the first PMI.

Steps 702 to 707 and steps 502 to 507 may be mutually referenced and referenced, and details are not described herein again.

(2) Second measurement feedback: steps 708 to 713.

Step 708: The base station generates a second signal based on a second weighting matrix $W_{CSI-RS_2}$ and the CSI-RS sequence.

The weighting matrix $W_{CSI-RS_2}$ herein may correspond to the second weighting matrix in FIG. 4.

For example, the base station sets the second weighting matrix of the CSI-RS whose port quantity is 8 as follows:

$$W_{CSI-RS_2} = \begin{bmatrix} 1 & e^{j11.25\pi/180} & 0 & 0 & 0 & 0 & 0 \end{bmatrix}$$

A phase of the weighted value of the channel 2 in the second weighting matrix is rotated by 11.25° relative to a phase of the weighted value of the channel 2 in the first weighting matrix, that is, the preset angle is 11.25°.

In this case, the second signal may be expressed as:

$$S_2(t) = W_{CSI-RS_2} \begin{bmatrix} x_1(t) \\ x_2(t) \\ \dots \\ x_8(t) \end{bmatrix} = x_1(t) + e^{j11.25\pi/180} x_2(t)$$

"·" represents matrix point multiplication. $x_n(t)$ is a transmit signal of an $n^{th}$ port. The transmit signal is a CSI-RS. Signals between the ports are code division multiplexed and are in a pairwise orthogonal manner. n is a positive integer greater than 0 and less than 9.

Step 709: The base station sends the second signal to the terminal.

The second signal is combined after passing through the channel 1 and the channel 2, and is transmitted by an antenna 1 to the terminal.

If a phase error exists between the channel 1 and the channel 2, the second signal is affected by the phase error between the channel 1 and the channel 2 in a transmission process. An actual transmit signal (that is, an actual second signal) of the antenna 1 may be represented as:

$$\hat{S}_2(t) = (W_{CSI-RS_2} \cdot W_{err_2}) \begin{bmatrix} x_1(t) \\ x_2(t) \\ \dots \\ x_8(t) \end{bmatrix} = x_1(t) + e^{j(\Delta\varphi_0 + 11.25\pi/180)} x_2(t)$$

"·" represents matrix point multiplication. $x_n(t)$ is the transmit signal of the $n^{th}$ port. The signals between the ports are code division multiplexed and are in a pairwise orthogonal manner. n is a positive integer greater than 0 and less than 9. $W_{err_2}$ is a phase error matrix, which may be represented as:

$$W_{err_2} = \begin{bmatrix} 1 & e^{j(\Delta\varphi_0 + 11.25\pi/180)} & 0 & 0 & 0 & 0 & 0 \end{bmatrix}$$

$\Delta\varphi_0$ is an actual phase error between the channel 1 and the channel 2.

Step 710: After receiving the second signal from the base station, the terminal determines a second phase error matrix $W_{err_2}$ based on the second signal and the CSI-RS sequence.

It is assumed that a signal received by the terminal is $\hat{S}_2(t)$. The terminal may parse $\hat{S}_2(t)$ based on a locally stored CSI-RS sequence to obtain the phase error matrix.

For example, the terminal parses the second signal according to the following formula, to determine the second phase error matrix:

$$\int \hat{S}_2^*(t) \cdot x_1(t)dt = 1$$

$$\int \hat{S}_2^*(t) \cdot x_2(t)dt = e^{j(\Delta\varphi_0 + 11.25\pi/180)}$$

$$\ldots$$

$$\int \hat{S}_2^*(t) \cdot x_8(t)dt = 0$$

" *" represents a complex number conjugate.

According to the foregoing formula, the terminal obtains a demodulation vector $[1, e^{j(\Delta\varphi_0 + 11.25\pi/180)}, 0, 0, 0, 0, 0]$, that is, the terminal determines the phase error matrix

$$W_{err_2} = \begin{bmatrix} 1 & e^{j(\Delta\varphi_0 + 11.25\pi/180)} & 0 & 0 & 0 & 0 & 0 \end{bmatrix}.$$

Step 711: The terminal selects a second precoding matrix $W_{feedback_2}$ that matches the second phase error matrix $W_{err2}$ determined in step 710.

For example, the terminal determines, based on the rank and the port quantity that are indicated by the second indication information in step 701, that a precoding matrix set is a precoding matrix set whose rank is 1 and whose port quantity is 8, and then the terminal selects, from precoding aggregation, a precoding matrix that has a maximum inner product with the phase error matrix $W_{err2}$. In other words, the second precoding matrix selected by the terminal is a precoding matrix that has the maximum inner product with the phase error matrix $W_{err2}$, has a rank = 1, and has a port quantity = 8.

Step 712: The terminal sends a second PMI to the base station.

The second PMI is used to indicate the second precoding matrix selected in step 711.

For example, the PMI carries an index of the second precoding matrix.

Step 713: After receiving the second PMI of the terminal, the base station determines a second phase error $\Delta\hat{\varphi}_2$ between the channel 1 and the channel 2 based on the second PMI.

For example, the base station determines the second precoding matrix based on the index of the precoding matrix indicated by the second PMI, and further determines the second phase error between the channel 1 and the channel 2 based on the second precoding matrix. It is assumed that the base station determines that the precoding matrix fed back by the terminal is $W_{feedback_2}$. The phase error between the channel 1 and the channel 2 may be estimated as:

$$\Delta\hat{\varphi}_2 = \arg\left\{ W_{feedback_2}(2) / W_{feedback_2}(1) \right\}$$

$W_{feedback_2}(m)$ represents an $m^{th}$ element of $W_{feedback_2}$, m = 1 or 2, and arg $\{\cdot\}$ represents taking a complex number phase.

It should be noted that FIG. 7 shows only two measurement and feedback processes. Actually, more than two measurement and feedback processes may be performed based on actually required phase error estimation precision. In a subsequent measurement feedback (for example, a third measurement feedback or a fourth measurement feedback) process, phase error estimation with higher precision can be implemented by properly setting the weighting matrix.

Step 714: Perform phase correction based on phase errors separately determined in a plurality of measurement feedback processes.

In some implementations, the base station determines a final phase error estimation result based on the plurality of phase errors obtained in the plurality of measurement and feedback processes, and compensates for the phase error between the channel 1 and the channel 2 based on the final phase error estimation result, to correct a phase between the channel 1 and the channel 2.

For example, two measurement feedback processes are performed. The base station compensates for the phase error between the channel 1 and the channel 2 based on the first phase error and the second phase error, to correct the phases of the channel 1 and the channel 2.

For example, the base station determines, based on the first phase error and the second phase error, the final estimation result of the two feedback measurements, and compensates for the phase error between the channel 1 and the channel 2 based on the final estimation results. In this example, $\alpha$ is 11.25°.

For example, if $\Delta\hat{\varphi}_2 = \Delta\hat{\varphi}_1$, the base station determines a final estimation result $\Delta\hat{\varphi} = \Delta\hat{\varphi}_1 - 5.625°$. If $\Delta\hat{\varphi}_2 = \Delta\hat{\varphi}_1 + 22.5°$, the base station determines a final estimation result $\Delta\hat{\varphi} = \Delta\hat{\varphi}_1 + 5.625°$. If $\Delta\hat{\varphi}_2$ is neither equal to $\Delta\hat{\varphi}_1$ nor equal to $\Delta\hat{\varphi}_1 + 5.625°$, the current measurement fails, and steps 702 to 713 are performed again. Then, the base station compensates for the phase error between the channel 1 and the channel 2 based on $\Delta\hat{\varphi}$, to implement phase correction between the channel 1 and the channel 2.

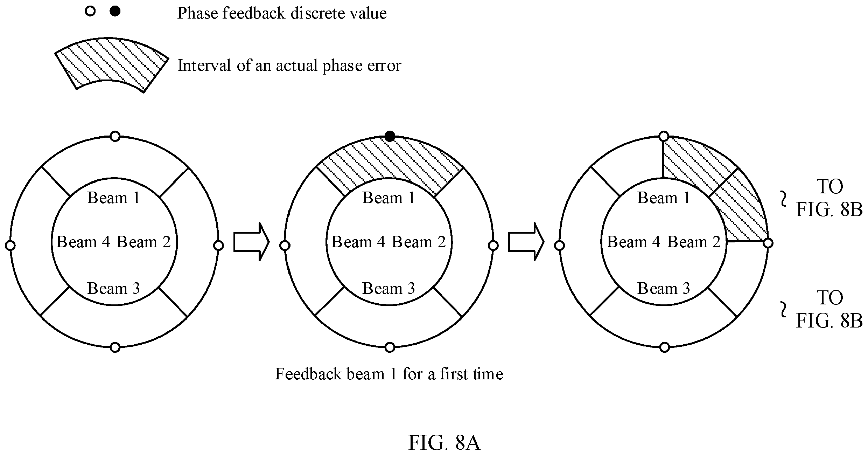

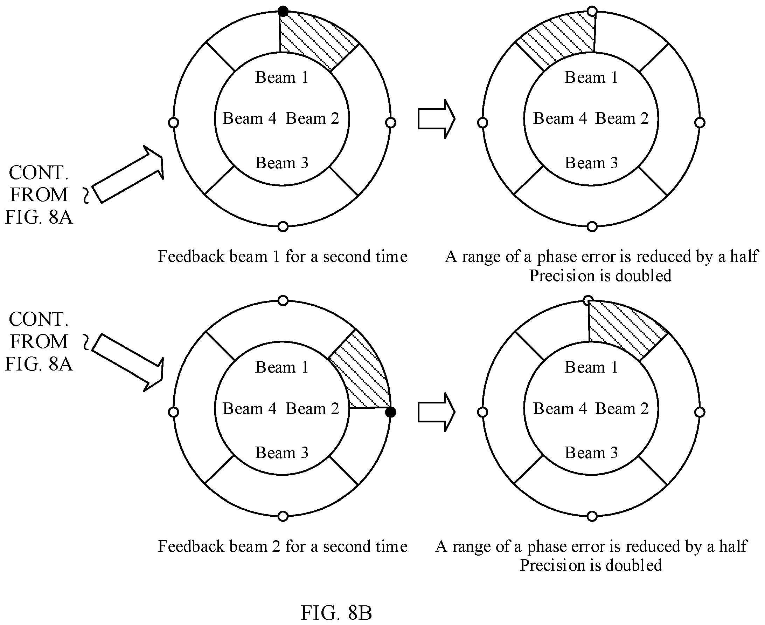

Phase error estimation precision of the plurality of measurements is described with reference to FIG. 8A and FIG. 8B. FIG. 8A and FIG. 8B are still described by using an example in which a spatial domain phase is divided into four intervals (that is, N1*O1=4). For the four intervals, refer to the foregoing related descriptions. Details are not described herein again. If the terminal feeds back the precoding matrix corresponding to the beam 1 in the first measurement feedback process, the base station may determine that the real phase error falls within an interval [first discrete value-45°, first discrete value+45°]. In the second measurement feedback process, the base station sets phase rotation of a weighted value of the channel 2 in the second weighting matrix to 45°, that is, a phase difference between the channel 1 and the channel 2 is a sum of a real phase error and 45°. If in the second measurement feedback process, the terminal still feeds back the precoding matrix corresponding to the beam 1. The base station may determine that the phase difference between the channel 1 and the channel 2 falls within an interval of [first discrete value, first discrete value+45°], that is, the real phase error falls within an interval of [first discrete value-45°, first discrete value]. If in the second measurement feedback process, the terminal feeds back the precoding matrix corresponding to the beam 2. The base station may determine that the phase difference between the channel 1 and the channel 2 falls within an interval of [first discrete value+45°, first discrete value+90°], that is, the real phase error falls within an interval of [first discrete value, first discrete value+45°]. In this way, the phase error estimation precision may be doubled, and so on. Theoretically, after n measurement feedbacks, the phase error estimation precision may be increased by $2^{n-1}$ times.

In Example 2, phase estimation error precision is further improved by using a plurality of measurement feedbacks. For a case in which the base station instructs the terminal to feed back a PMI whose rank is 1 and whose port quantity is 8, theoretically, after n measurement feedbacks, phase error estimation precision is $\pm 22.5° \cdot 2^{-n}$. For example, two measurement feedback processes are performed. Phase estimation precision obtained after the second measurement feedback is $\pm 5.625°$. Compared with precision of $\pm 11.25°$ that can be achieved by one measurement in Example 1, precision can be doubled.

It should be noted that a moment at which the base station performs step 701 is not limited in this application, provided that the moment is before step 704. It should be further noted that step 701 and step 310 may be mutually referenced, step 703 and step 301 may be mutually referenced, step 704 and step 705 and step 302 may be mutually referenced, step 706 and step 303 may be mutually referenced, step 707 and step 304 may be mutually referenced, step 709 and step 305 may be mutually referenced, step 710 and step 711 and step 306 may be mutually referenced, and step 712 and step 307 may be mutually referenced, step 713 and step 308 may be mutually referenced, and step 714 and step 309 may be mutually referenced.

It may be understood that, to implement functions in the foregoing embodiments, the base station and the terminal include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

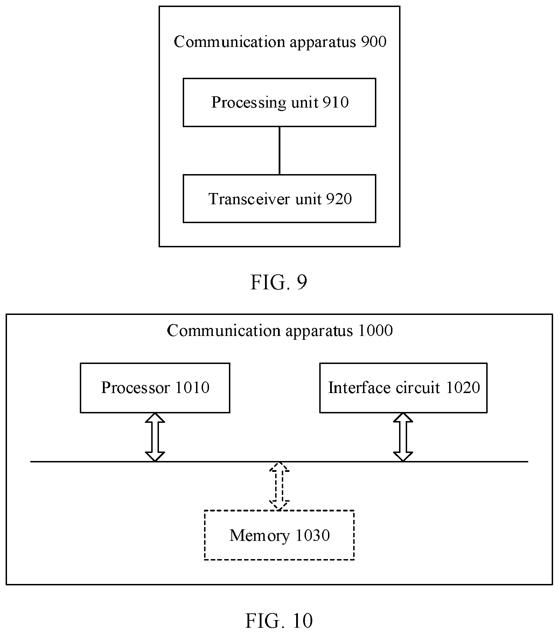

FIG. 8A and FIG. 8B, and FIG. 9 are schematic diagrams of structures of possible communication apparatuses according to embodiments of this application. These communication apparatuses may be configured to implement functions of the terminal or the base station in the foregoing method embodiments, and therefore can also implement beneficial effects of the foregoing method embodiments. In this embodiment of this application, the communication apparatus may be the terminal 120a, 120b, 120c, 120d, 120e, 120f, 120g, 120h, 120i, or 120j shown in FIG. 1, or may be the base station shown in FIG. 1, or may be a module (such as a chip) used in a terminal or a base station.

As shown in FIG. 8A and FIG. 8B, a communication apparatus 800 includes a processing unit 810 and a transceiver unit 820. The communication apparatus 800 is configured to implement functions of the terminal or the base station in the method embodiment shown in FIG. 3, FIG. 4, FIG. 5, or FIG. 7.

When the communication apparatus 800 is configured to implement the functions of the base station in the method embodiment shown in FIG. 3,

the transceiver unit 820 is used by the base station to send a first signal to the terminal, and receive first indication information from the terminal.

The processing unit 810 is configured to: determine a first phase error between the N channels based on the first precoding matrix indicated by the first indication information; and correct phases of some or all of the N channels based on the first phase error.

Optionally, the transceiver unit 820 is further configured to send second indication information to the terminal.

When the communication apparatus 800 is configured to implement the functions of the terminal in the method embodiment shown in FIG. 3,

the transceiver unit 820 is configured to receive a first signal from a base station.

The processing unit 810 is configured to determine a first precoding matrix based on the first signal.

The transceiver unit 820 is further configured to send first indication information to the base station.

Optionally, the transceiver unit 820 is further configured to receive third indication information from the base station.

When the communication apparatus 800 is configured to implement the functions of the base station in the method embodiment shown in FIG. 4,

the transceiver unit 820 is configured to send a first signal to the terminal, and is configured to receive first indication information from the terminal.

The processing unit 810 is configured to determine a first phase error between N channels based on the first precoding matrix indicated by the first indication information.

The transceiver unit 820 is further configured to: send a second signal to the terminal; and receive third indication information from the terminal.

The processing unit 810 is further configured to determine a second phase error between the N channels based on a second precoding matrix indicated by the third indication information.

The processing unit 810 is further configured to correct phases of some or all of the N channels based on the first phase error and the second phase error.

Optionally, the transceiver unit 820 is further configured to send second indication information to the terminal.

When the communication apparatus 800 is configured to implement the functions of the terminal in the method embodiment shown in FIG. 4,

the transceiver unit 820 is configured to receive a first signal from a base station.

The processing unit 810 is configured to determine a first precoding matrix based on the first signal.

The transceiver unit 820 is further configured to send first indication information to the base station.

The transceiver unit 820 is further configured to receive a second signal from the base station.

The processing unit 810 is further configured to determine a second precoding matrix based on the second signal.

The transceiver unit 820 is further configured to send third indication information to the base station.

Optionally, the transceiver unit 820 is further configured to receive second indication information from the base station.

When the communication apparatus 800 is configured to implement the functions of the base station in the method embodiment shown in FIG. 5,

the transceiver unit 820 is configured to send second indication information to the terminal.

The processing unit 810 is configured to generate a first signal based on a weighting matrix $W_{CSI\text{-}RS}$ and a CSI-RS sequence.

The transceiver unit 820 is further configured to send the first signal to the terminal.

The transceiver unit 820 is further configured to receive a PMI from the terminal.

The processing unit 810 is further configured to determine a phase error between a channel 1 and a channel 2 based on the PMI after receiving the PMI of the terminal.

The processing unit 810 is further configured to compensate for the phase error between the channel 1 and the channel 2 based on the determined phase error.

When the communication apparatus 800 is configured to implement the functions of the terminal in the method embodiment shown in FIG. 5,

the transceiver unit 820 is configured to: receive second indication information from the base station; and receive a first signal from the base station.

The processing unit 810 is configured to determine a phase error matrix $W_{err}$ based on the first signal and a CSI-RS sequence.

The processing unit 810 is further configured to select a precoding matrix $W_{feedback}$ that matches the phase error matrix $W_{err}$.

The transceiver unit 820 is further configured to send the PMI to the base station.

When the communication apparatus 800 is configured to implement the functions of the base station in the method embodiment shown in FIG. 7,

the transceiver unit 820 is configured to send second indication information to the terminal.

The processing unit 810 is configured to generate a first signal based on a first weighting matrix $W_{CSI\text{-}RS_1}$ and a CSI-RS sequence.

The transceiver unit 820 is further configured to send the first signal to the terminal.

The transceiver unit 820 is further configured to receive a first PMI from the terminal.

The processing unit 810 is further configured to determine a first phase error between a channel 1 and a channel 2 based on the first PMI.

The processing unit 810 is further configured to generate a second signal based on a second weighting matrix $W_{CSI\text{-}RS_2}$ and the CSI-RS sequence.

The transceiver unit 820 is further configured to send the second signal to the terminal.

The transceiver unit 820 is further configured to receive a second PMI from the terminal.

The processing unit 810 is further configured to determine a second phase error $\hat{\Delta\varphi}_2$ between a channel 1 and a channel 2 based on the second PMI.

The processing unit 810 is further configured to compensate for the phase error between the channel 1 and the channel 2 based on the first phase error and the second phase error.

When the communication apparatus 800 is configured to implement the functions of the terminal in the method embodiment shown in FIG. 7,

the transceiver unit 820 is configured to: receive second indication information from the base station; and receive a first signal from the base station.

The processing unit 810 is configured to determine a first phase error matrix $W_{err_1}$ based on the first signal and a CSI-RS sequence.

The processing unit 810 is further configured to select a first precoding matrix $W_{feedback_1}$ that matches the first phase error matrix $W_{err_1}$.

The transceiver unit 820 is further configured to send a first PMI to the base station.

The transceiver unit 820 is further configured to receive a second signal from the base station.

The processing unit 810 is further configured to determine a second phase error matrix $W_{err_2}$ based on the second signal and the CSI-RS sequence.

The processing unit 810 is further configured to select a second precoding matrix $W_{feedback_2}$ that matches the second phase error matrix $W_{err_2}$.

The transceiver unit 820 is further configured to send a second PMI to the base station.

For more detailed descriptions of the processing unit 810 and the transceiver unit 820, directly refer to related descriptions in the method embodiments shown in FIG. 3 to FIG. 7. Details are not described herein again.

As shown in FIG. 9, a communication apparatus 900 includes a processor 910 and an interface circuit 920. The processor 910 and the interface circuit 920 are coupled to each other. It can be understood that the interface circuit 920 may be a transceiver or an input/output interface. Optionally, the communication apparatus 900 may further include a memory 930, configured to store instructions executed by the processor 910, or store input data required by the processor 910 to run the instructions, or store data generated after the processor 910 runs the instructions.

When the communication apparatus 900 is configured to implement the methods shown in FIG. 3 to FIG. 7, the processor 910 is configured to implement a function of the processing unit 810, and the interface circuit 920 is configured to implement a function of the transceiver unit 820.

When the communication apparatus is a chip used in a terminal device, the chip in the terminal device implements functions of the terminal device in the foregoing method embodiments. The terminal device chip receives information from another module (for example, a radio frequency module or an antenna) in the terminal device, where the information is sent by the base station to the terminal device. Alternatively, the terminal device chip sends information to another module (for example, a radio frequency module or an antenna) in the terminal device, where the information is sent by the terminal device to the base station.

When the communication apparatus is a chip used in a base station, the base station chip implements functions of the base station in the foregoing method embodiments. The base station chip receives information from another module (for example, a radio frequency module or an antenna) in the base station, where the information is sent by the terminal device to the base station. Alternatively, the base station chip sends information to another module (for example, a radio frequency module or an antenna) in the base station, where the information is sent by the base station to the terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal device. Certainly, the processor and the storage medium may alternatively exist in a base station or a terminal device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description. The foregoing examples are merely intended to help a person skilled in the art understand embodiments of this application, but are not intended to limit embodiments of this application to a specific value or a specific scenario in the examples. It is clear that a person skilled in the art may make various equivalent modifications or changes based on the examples provided above, and such modifications and changes also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A phase correction method, wherein the method comprises:

   sending, by a network device, a first signal to a terminal, wherein the first signal is combined after passing through N channels of the network device and then sent to the terminal, and N is an integer greater than 1; receiving, by the network device, first indication information from the terminal, wherein the first indication information indicates a first precoding matrix determined based on the first signal;

determining, by the network device, a first phase error between the N channels based on the first precoding matrix; and

correcting, by the network device, phases of some or all of the N channels based on the first phase error.

2. The method according to claim 1, wherein a port quantity of the first precoding matrix is M, and M is an integer greater than or equal to N.

3. The method according to claim 2, wherein the method further comprises:
sending, by the network device, second indication information to the terminal, wherein the second indication information indicates the terminal to feed back a precoding matrix whose port quantity is M.

4. The method according to any one of claims 1 to 3, wherein a rank of the first precoding matrix is 1.

5. The method according to claim 4, wherein the method further comprises:
sending, by the network device, the second indication information to the terminal, wherein the second indication information indicates the terminal to feed back a precoding matrix whose rank is 1.

6. The method according to any one of claims 1 to 5, wherein the method further comprises:

sending, by the network device, a second signal to the terminal through the N channels, wherein the second signal is combined and then sent to the terminal after passing through the N channels;
receiving, by the network device, third indication information from the terminal, wherein the third indication information indicates a second precoding matrix determined based on the second signal;
determining, by the network device, a second phase error between the N channels based on the second precoding matrix; and
the correcting, by the network device, phases of some or all of the N channels based on the first phase error comprises:
correcting, by the network device, the phases of the some or all of the N channels based on the first phase error and the second phase error.

7. The method according to claim 6, wherein before passing through the N channels, the first signal is weighted by using a first weighting matrix, and the first weighting matrix comprises weighted values respectively corresponding to the N channels;

before passing through the N channels, the second signal is weighted by using a second weighting matrix, wherein the second weighting matrix comprises weighted values respectively corresponding to the N channels; and
phase rotation by a preset angle is performed on weighted values of the some of the N channels in the second weighting matrix relative to weighted values of the some channels in the first weighting matrix.

8. The method according to claim 7, wherein N is 2, the N channels comprise a first channel and a second channel, a weighted value of the first channel in the first weighting matrix is the same as a weighted value of the first channel in the second weighting matrix, and phase rotation by a preset angle is performed on a weighted value of the second channel in the second weighting matrix relative to a weighted value of the first channel in the first weighting matrix.

9. The method according to claim 8, wherein the method further comprises:

determining, by the network device, a to-be-corrected phase error if the first phase error is equal to the second phase error, wherein the to-be-corrected phase error is a difference between the first phase error and a half of the preset angle; and
the correcting, by the network device, the phases of the some or all of the N channels based on the first phase error and the second phase error comprises:
correcting, by the network device, a phase of the first channel and/or a phase of the second channel based on the to-be-corrected phase error.

10. The method according to claim 8, wherein the method further comprises:

determining, by the network device, a to-be-corrected phase error if the first phase error is equal to a sum of the second phase error and twice the preset angle, wherein the to-be-corrected phase error is a sum of the first phase error and a half of the preset angle; and

the correcting, by the network device, the phases of the some or all of the N channels based on the first phase error and the second phase error comprises:

correcting, by the network device, a phase of the first channel and/or a phase of the second channel based on the to-be-corrected phase error.

11. The method according to any one of claims 7 to 10, wherein the preset angle is related to a quantity of horizontal-dimensional beams and a beam densification multiple.

12. The method according to any one of claims 1 to 11, wherein after being combined, the first signal is transmitted by an antenna to the terminal after being amplified by a power amplifier.

13. The method according to any one of claims 1 to 12, wherein the first signal is a channel state information-reference signal CSI-RS.

14. A phase correction method, wherein the method comprises:

receiving, by a terminal, a first signal from a network device, wherein the first signal is combined after passing through N channels of the network device and then received by the terminal, and N is an integer greater than 1;
determining, by the terminal, a first precoding matrix based on the first signal, wherein the first precoding matrix is used to correct phases of some or all of the N channels; and
sending, by the terminal, first indication information to the network device, wherein the first indication information indicates the first precoding matrix.

15. The method according to claim 14, wherein a port quantity of the first precoding matrix is M, and M is an integer greater than or equal to N.

16. The method according to claim 15, wherein the method further comprises:
receiving, by the terminal, second indication information from the network device, wherein the second indication information indicates the terminal to feed back a precoding matrix whose port quantity is M.

17. The method according to any one of claims 14 to 16, wherein a rank of the first precoding matrix is 1.

18. The method according to claim 17, wherein the method further comprises:
receiving, by the terminal, the second indication information from the network device, wherein the second indication information indicates the terminal to feed back a precoding matrix whose rank is 1.

19. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 13 or the method according to any one of claims 14 to 18 by using a logic circuit or by executing code instructions.

20. A chip, comprising a processor, wherein the processor is coupled to a memory, the memory is configured to store a computer program, and the processor is configured to execute the computer program stored in the memory to implement the method according to any one of claims 1 to 13, or implement the method according to any one of claims 14 to 18.

21. A computer-readable storage medium, wherein the storage medium stores a computer program or instructions, and when the computer program or the instructions are executed by a communication apparatus, the method according to any one of claims 1 to 13 is implemented, or the method according to any one of claims 14 to 18 is implemented.

22. A computer program product, comprising a computer program, wherein when the computer program is run, the method according to any one of claims 1 to 13 is implemented, or the method according to any one of claims 14 to 18 is implemented.

FIG. 1

EP 4 287 523 A1

FIG. 2

FIG. 3

Base station → Terminal

310: Second indication information

301: First signal

302: Determine a first precoding matrix based on the first signal

303: First indication information (first precoding matrix)

304: Determine a first phase error between N channels based on the first precoding matrix

305: Second signal

306. Determine a second precoding matrix based on a second signal

307: Third indication information (second precoding matrix)

308: Determine a second phase error between the N channels based on the second precoding matrix

309: Correct phases of some or all of the N channels based on phase errors separately determined in a plurality of measurement and feedback processes

FIG. 4

```
┌─────────────────────┐                              ┌─────────────────────┐
│    Base station     │                              │      Terminal       │
└─────────────────────┘                              └─────────────────────┘
          │                                                     │
          │      501: Second indication information             │
          │──── (indicates the terminal to feed back a ────────▶│
          │     precoding matrix whose rank is 1 and            │
          │        whose port quantity is 8)                    │
          │                                                     │
┌─────────────────────────────────┐                            │
│ 502: Generate a first signal    │                            │
│ based on a weighting matrix      │                            │
│ W_CSI-RS and a CSI-RS sequence   │                            │
└─────────────────────────────────┘                            │
          │                                                     │
          │              503: First signal                      │
          │────────────────────────────────────────────────────▶│
          │                                                     │
          │                  ┌──────────────────────────────────────────┐
          │                  │ 504: Determine a phase error matrix       │
          │                  │ W_err based on the first signal and the   │
          │                  │ CSI-RS sequence                           │
          │                  └──────────────────────────────────────────┘
          │                                                     │
          │                  ┌──────────────────────────────────────────┐
          │                  │ 505: Determine a precoding matrix         │
          │                  │ W_feedback that matches W_err             │
          │                  └──────────────────────────────────────────┘
          │                                                     │
          │                  506: PMI                            │
          │◀────────────────────────────────────────────────────│
          │                                                     │
┌─────────────────────────────────┐                            │
│ 507: Determine a phase error     │                            │
│ based on the PMI                 │                            │
└─────────────────────────────────┘                            │
          │                                                     │
┌─────────────────────────────────┐                            │
│ 508: Perform phase correction    │                            │
│ based on the phase error         │                            │
└─────────────────────────────────┘                            │
          │                                                     │
```

FIG. 5

○ ● Phase feedback discrete value

Interval of an actual phase error

First discrete value

Fourth discrete value ○    Beam 4    Beam 2    ○ Second discrete value

Beam 1

Beam 3

Third discrete value

FIG. 6

```
┌─────────────────────┐                                    ┌─────────────────────┐
│    Base station     │                                    │      Terminal       │
└─────────────────────┘                                    └─────────────────────┘
           │          701: Second indication information              │
           ├──────  (indicates the terminal to feed back a precoding  ──────▶│
           │        matrix whose rank is 1 and whose port quantity is 8)     │
┌──────────┴──────────────────────────────────────┐                  │
│ 702: Generate a first signal based on a first weighted│             │
│    matrix $W_{CSI\text{-}RS1}$ and a CSI-RS sequence   │             │
└──────────┬──────────────────────────────────────┘                  │
           │─────────────────── 703: First signal ─────────────────────▶│
           │                 ┌──────────────────────────────────────────┴──────────┐
           │                 │ 704: Determine a first phase error matrix $W_{err1}$ based on│
           │                 │       the first signal and the CSI-RS sequence        │
           │                 └──────────────────────────────────────────┬──────────┘
           │                 ┌──────────────────────────────────────────┴──────────┐
           │                 │ 705: Determine a first precoding matrix $W_{feedback1}$ that │
           │                 │                matches $W_{err1}$                      │
           │                 └──────────────────────────────────────────┬──────────┘
           │◀────────────────── 706: First PMI ─────────────────────────│
┌──────────┴──────────────────────────────────────┐                  │
│ 707: Determine a first phase error based on the first PMI │          │
└──────────┬──────────────────────────────────────┘                  │
┌──────────┴──────────────────────────────────────┐                  │
│ 708. Generate a second signal based on a second    │                │
│ weighting matrix $W_{CSI\text{-}RS1}$ and the CSI-RS sequence │     │
└──────────┬──────────────────────────────────────┘                  │
           │─────────────────── 709: Second signal ────────────────────▶│
           │                 ┌──────────────────────────────────────────┴──────────┐
           │                 │ 710: Determine a second phase error matrix $W_{err2}$ based │
           │                 │       on the second signal and the CSI-RS sequence     │
           │                 └──────────────────────────────────────────┬──────────┘
           │                 ┌──────────────────────────────────────────┴──────────┐
           │                 │ 711: Determine a second precoding matrix $W_{feedback1}$ that│
           │                 │                matches $W_{err2}$                      │
           │                 └──────────────────────────────────────────┬──────────┘
           │◀────────────────── 712: Second PMI ────────────────────────│
┌──────────┴──────────────────────────────────────┐                  │
│ 713: Determine a second phase error based on the   │                │
│                second PMI                          │                │
└──────────┬──────────────────────────────────────┘                  │
┌──────────┴──────────────────────────────────────┐                  │
│ 714: Perform phase correction based on phase errors│                │
│ separately determined in a plurality of measurement│                │
│              feedback processes                    │                │
└──────────┬──────────────────────────────────────┘                  │
           │                                                           │
```

FIG. 7

○ ● Phase feedback discrete value

Interval of an actual phase error

Feedback beam 1 for a first time

TO FIG. 8B

TO FIG. 8B

FIG. 8A

CONT.
FROM
FIG. 8A

Beam 1

Beam 4  Beam 2

Beam 3

Beam 1

Beam 4  Beam 2

Beam 3

Feedback beam 1 for a second time

A range of a phase error is reduced by a half
Precision is doubled

CONT.
FROM
FIG. 8A

Beam 1

Beam 4  Beam 2

Beam 3

Beam 1

Beam 4  Beam 2

Beam 3

Feedback beam 2 for a second time

A range of a phase error is reduced by a half
Precision is doubled

FIG. 8B

Communication apparatus 900

Processing unit 910

Transceiver unit 920

FIG. 9

Communication apparatus 1000

Processor 1010

Interface circuit 1020

Memory 1030

FIG. 10

## INTERNATIONAL SEARCH REPORT

| International application No. |
| --- |
| **PCT/CN2022/083113** |

**A. CLASSIFICATION OF SUBJECT MATTER**

H04B 7/0456(2017.01)i; H04B 7/06(2006.01)i

According to International Patent Classification (IPC) or to both national classification and IPC

**B. FIELDS SEARCHED**

Minimum documentation searched (classification system followed by classification symbols)

H04B7/-

Documentation searched other than minimum documentation to the extent that such documents are included in the fields searched

Electronic data base consulted during the international search (name of data base and, where practicable, search terms used)

CNABS; CNTXT; VEN; ENTXT; 3GPP; CNKI: 通道, 信号, 合成, 合路, 预编码矩阵, 预编码器, 相位, 误差, 补偿, 校正, 修正, 失配, 终端, UE, RRU, phase error+, phase compensat+, distribut+, PMI, precoding matrix, digital indoor system

**C. DOCUMENTS CONSIDERED TO BE RELEVANT**

| Category* | Citation of document, with indication, where appropriate, of the relevant passages | Relevant to claim No. |
| --- | --- | --- |
| X | CN 108023624 A (HUAWEI TECHNOLOGIES CO., LTD.) 11 May 2018 (2018-05-11) description, paragraphs 0002 and 0117-0141, and figures 1-2, and 9 | 1-22 |
| X | CN 103039018 A (PANTECH CO., LTD.) 10 April 2013 (2013-04-10) description, paragraphs 0026, 0049-0051, and 0069-0093, and figures 2-4 | 1-22 |
| A | CN 107888250 A (CHINA ACADEMY OF TELECOMMUNICATIONS TECHNOLOGY) 06 April 2018 (2018-04-06) entire document | 1-22 |
| A | CN 112073097 A (SOUTHEAST UNIVERSITY) 11 December 2020 (2020-12-11) entire document | 1-22 |
| A | WO 2020174967 A1 (SHARP KABUSHIKI KAISHA et al.) 03 September 2020 (2020-09-03) entire document | 1-22 |
| A | US 2011002410 A1 (FORENZA ANTONIO et al.) 06 January 2011 (2011-01-06) entire document | 1-22 |
| A | VIVO. "Further discussion and evaluation on MTRP CSI and Partial reciprocity" *3GPP TSG RAN WG1 #103-e R12007650*, 24 October 2020 (2020-10-24), entire document | 1-22 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 May 2022** | **20 June 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/083113**

| C. | DOCUMENTS CONSIDERED TO BE RELEVANT | | |
|---|---|---|
| Category* | Citation of document, with indication, where appropriate, of the relevant passages | Relevant to claim No. |
| A | HUAWEI et al. "DL Codebook design for multi-panel structured MIMO in NR" *3GPP TSG RAN WG1 Meeting #88 R1-1701691*, 07 February 2017 (2017-02-07), entire document | 1-22 |

Form PCT/ISA/210 (second sheet) (January 2015)

<table>
<tr><td colspan="2" align="center">**INTERNATIONAL SEARCH REPORT**<br>**Information on patent family members**</td><td colspan="2">International application No.<br>**PCT/CN2022/083113**</td></tr>
</table>

| Patent document cited in search report | | | Publication date (day/month/year) | Patent family member(s) | | | Publication date (day/month/year) |
|---|---|---|---|---|---|---|---|
| CN | 108023624 | A | 11 May 2018 | US | 2019260453 | A1 | 22 August 2019 |
| | | | | JP | 2019537874 | A | 26 December 2019 |
| | | | | EP | 3506522 | A1 | 03 July 2019 |
| | | | | WO | 2018082622 | A1 | 11 May 2018 |
| | | | | EP | 3506522 | A4 | 31 July 2019 |
| | | | | IN | 201927010694 | A | 09 August 2019 |
| | | | | US | 10924174 | B2 | 16 February 2021 |
| | | | | CN | 108023624 | B | 01 October 2021 |
| CN | 103039018 | A | 10 April 2013 | US | 2013114763 | A1 | 09 May 2013 |
| | | | | JP | 2013534110 | A | 29 August 2013 |
| | | | | WO | 2012005476 | A2 | 12 January 2012 |
| | | | | KR | 20120003781 | A | 11 January 2012 |
| | | | | EP | 2592763 | A2 | 15 May 2013 |
| | | | | WO | 2012005476 | A3 | 01 March 2012 |
| | | | | US | 9136924 | B2 | 15 September 2015 |
| | | | | KR | 20160148495 | A | 26 December 2016 |
| | | | | EP | 2592763 | A4 | 12 April 2017 |
| | | | | KR | 101771549 | B1 | 30 August 2017 |
| | | | | CN | 103039018 | B | 17 November 2017 |
| | | | | JP | 6293482 | B2 | 14 March 2018 |
| | | | | EP | 2592763 | B1 | 23 May 2018 |
| CN | 107888250 | A | 06 April 2018 | CN | 107888250 | B | 06 November 2020 |
| CN | 112073097 | A | 11 December 2020 | CN | 112073097 | B | 28 December 2021 |
| WO | 2020174967 | A1 | 03 September 2020 | JP | 2020137085 | A | 31 August 2020 |
| US | 2011002410 | A1 | 06 January 2011 | US | 10187133 | B2 | 22 January 2019 |

Form PCT/ISA/210 (patent family annex) (January 2015)

**EP 4 287 523 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110362397